# EUROPEAN PATENT SPECIFICATION

(11) **EP 3 763 213 B1**
(45) Date of publication and mention of the grant of the patent: **28.01.2026**
(21) Application number: 19763646.7
(22) Date of filing: 05.03.2019
(51) Int. Cl.: A01N 59/20, A01N 37/44, A01N 43/36, A01N 43/38, A01G 7/06, A01P 21/00, A01P 3/00

(54) **METHOD FOR INDUCING PLANT DISEASE DAMAGE RESISTANCE OR PREVENTING PLANT DISEASE DAMAGE**
VERFAHREN ZUR INDUKTION VON RESISTENZ GEGEN PFLANZENKRANKHEITSSCHÄDEN ODER ZUR VERHINDERUNG VON PFLANZENKRANKHEITSSCHÄDEN
PROCÉDÉ POUR INDUIRE UNE RÉSISTANCE AUX DÉGÂTS CAUSÉS PAR UNE MALADIE VÉGÉTALE OU À PRÉVENIR LES DÉGÂTS CAUSÉS PAR UNE MALADIE VÉGÉTALE

(30) Priority: 05.03.2018 JP 2018038664
(43) Date of publication of application: 13.01.2021
(73) Proprietor: AJINOMOTO CO., INC., Chuo-ku Tokyo 104-8315 (JP)
(72) Inventor: KUWAHARA, Kayano, Kawasaki-shi, Kanagawa 210-8681 (JP); LANG, Yaqin, Kawasaki-shi, Kanagawa 210-8681 (JP); TAKEDA, Taito, Kawasaki-shi, Kanagawa 210-8681 (JP)
(74) Representative: Strehl & Partner mbB
(86) International application number: PCT/JP2019/008698
(87) International publication number: WO 2019/172277

(56) References cited:
- EP-A1- 2 862 443
- WO-A1-02/083599
- WO-A1-2011/087002
- WO-A1-2016/086830
- CN-A- 104 163 719
- CN-A- 104 642 385
- CN-A- 105 461 451
- CN-A- 105 924 266
- CN-A- 106 577 792
- JP-A- 2000 191 416
- US-B1- 8 529 964

## Description

### Technical Field

The present invention relates to a method for inducing disease resistance in a plant.

### Background Art

In order to control diseases of plants, there are used agricultural chemicals that control diseases with a direct action of a fungicide or the like on pathogenic microbes, and agricultural chemicals that control diseases of plants through enhancement of disease resistance of the plants themselves (disease resistance-inducing agricultural chemicals).

Copper compounds are used as ingredients of fungicides for agriculture.

Inorganic copper fungicides, such as Bordeaux mixture using copper sulfate as an active ingredient, have been utilized as fungicides for agriculture for many years, because of their effectiveness for a broad range of diseases from mycotic diseases to bacterial diseases, low appearance risk of resistant bacteria, high safety for humans and animals, and low cost.

However, copper sulfate has a problem that it often shows phytotoxicity against, for example, vegetables of *Cucurbitaceae, Brassicaceae,* and *Leguminosae,* and fruit trees such as those of citruses, grapes, and peaches. In order to reduce such phytotoxicity, calcium carbonate is usually used together in the Bordeaux mixture.

There are also recognized such cases that continuous use of copper, which is a heavy metal, causes accumulation thereof in soil, which results in aggravation of growth of crops, or accumulation thereof in groundwater, which results in health hazard for humans. Therefore, it is desired to reduce application amount of copper.

For example, bactericidal action of organic copper fungicides using oxine-copper or the like as an active ingredient is provided by copper ions like inorganic copper fungicides, but they show superior penetration of copper ions into bacterial cells, and higher efficacy compared with inorganic copper fungicides. Therefore, if an organic copper fungicide is used, application amount of copper can be reduced, and phytotoxicity can be thereby reduced compared with inorganic copper fungicides. However, many of organic compounds serving as a ligand of copper, such as oxine, are highly hazardous.

Amino acids are elements constituting proteins, and there are known examples of application of some amino acids to plants (Patent documents 1, 2, etc.).

A fungicidal composition containing a basic amino acid and a copper compound has also been reported (Patent document 3). This reference specifically discloses application of a composition containing lysine and copper sulfate to grape trees.

There has also been reported a liquid composition for promoting germination and promoting root growth in a plant, which contains an amino acid selected from proline, alanine, and glycine, 5 to 15% (w/w) of zinc, 3 to 10% (w/w) of manganese, 1 to 3% (w/w) of boron, 3 to 3.5% (w/w) of copper, and 0.1 to 1% (w/w) of a water-soluble derivative of vitamin K (Patent document 4). This reference specifically discloses application of such a composition to a corn plant.

### Prior art references

### Patent documents

Patent document 1: WO2011/087002
Patent document 2: Japanese Patent Laid-open (KOKAI) No. 6-80530
Patent document 3: WO2005/036967
Patent document 4: WO2013/186405

### Summary of the Invention

### Object to be Achieved by the Invention

An object of the present invention is to provide a method for inducing disease resistance in a plant. According to one embodiment, an object of the present invention is to provide a method for inducing disease resistance in a plant, which uses a small amount of copper.

### Means for Achieving the Object

The inventors of the present invention conducted various researches in order to achieve the aforementioned object. As a result, they found that by concomitantly applying a copper compound and a specific amino acid to a plant, a marked disease resistance-inducing effect can be obtained, and accomplished the present invention.

The present invention provides a method for inducing disease resistance in a plant, the method comprising:
applying the following ingredients (A) and (B) to the plant,
   (A) at least one kind of copper compound;
   (B) at least one kind of amino acid,
wherein the ingredient (B) is selected from the group consisting of an amino acid having a hydroxyl group and tryptophan, wherein the amino acid having a hydroxyl group is a non-aromatic amino acid having a hydroxyl group.
Preferred embodiments are defined in the appended claims.

### Brief Description of the Drawings

[Fig. 1] A graph showing disease resistance-inducing effect (chitinase activity) of concomitant use of copper sulfate and an amino acid in a cucumber plant.
[Fig. 2] A graph showing disease resistance-inducing effect (peroxidase activity) of concomitant use of copper sulfate and an amino acid in a cucumber plant.
[Fig. 3] A graph showing disease resistance-inducing effect (chitinase activity) of concomitant use of copper sulfate and an amino acid in a cucumber plant.
[Fig. 4] A graph showing disease resistance-inducing effect (peroxidase activity) of concomitant use of copper sulfate and an amino acid in a cucumber plant.
[Fig. 5] A graph showing disease resistance-inducing effect (chitinase activity) of concomitant use of copper sulfate and an amino acid in a cucumber plant.
[Fig. 6] A graph showing disease resistance-inducing effect (peroxidase activity) of concomitant use of copper sulfate and an amino acid in a cucumber plant.
[Fig. 7] A graph showing disease resistance-inducing effect (chitinase activity) of concomitant use of copper sulfate and an amino acid in a cucumber plant.
[Fig. 8] A graph showing disease resistance-inducing effect (peroxidase activity) of concomitant use of copper sulfate and an amino acid in a cucumber plant.
[Fig. 9] A graph showing disease resistance-inducing effect (chitinase activity) of concomitant use of copper sulfate and an amino acid in a cucumber plant.
[Fig. 10] A graph showing disease resistance-inducing effect (peroxidase activity) of concomitant use of copper sulfate and an amino acid in a cucumber plant.
[Fig. 11] A graph showing influence of Thr concentration on disease resistance-inducing effect (chitinase activity) of concomitant use of Thr and copper sulfate in a cucumber plant.
[Fig. 12] A graph showing influence of Thr concentration on disease resistance-inducing effect (peroxidase activity) of concomitant use of Thr and copper sulfate in a cucumber plant.
[Fig. 13] A graph showing influence of Lys concentration on disease resistance-inducing effect (chitinase activity) of concomitant use of Lys and copper sulfate in a cucumber plant.
[Fig. 14] A graph showing influence of Lys concentration on disease resistance-inducing effect (peroxidase activity) of concomitant use of Lys and copper sulfate in a cucumber plant.
[Fig. 15] A graph showing influence of Pro concentration on disease resistance-inducing effect (chitinase activity) of concomitant use of Pro and copper sulfate in a cucumber plant.
[Fig. 16] A graph showing influence of Pro concentration on disease resistance-inducing effect (peroxidase activity) of concomitant use of Pro and copper sulfate in a cucumber plant.
[Fig. 17] A graph showing influence of Ala concentration on disease resistance-inducing effect (chitinase activity) of concomitant use of Ala and copper sulfate in a cucumber plant.
[Fig. 18] A graph showing influence of Ala concentration on disease resistance-inducing effect (peroxidase activity) of concomitant use of Ala and copper sulfate in a cucumber plant.

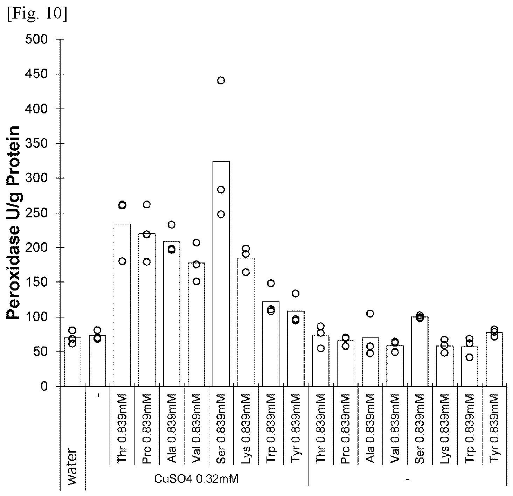

[Fig. 10] A graph showing influence of Val concentration on disease resistance-inducing effect (chitinase activity) of concomitant use of Val and copper sulfate in a cucumber plant.

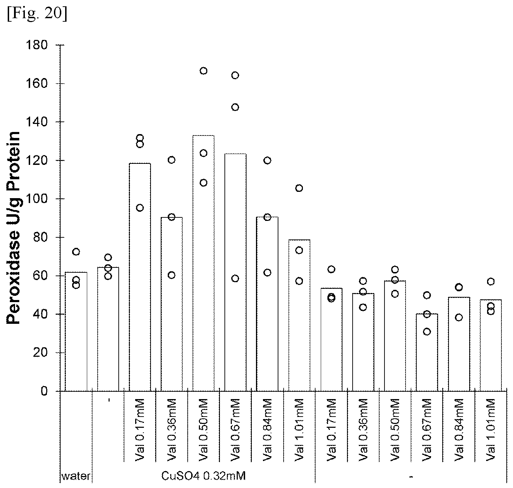

[Fig. 20] A graph showing influence of Val concentration on disease resistance-inducing effect (peroxidase activity) of concomitant use of Val and copper sulfate in a cucumber plant.

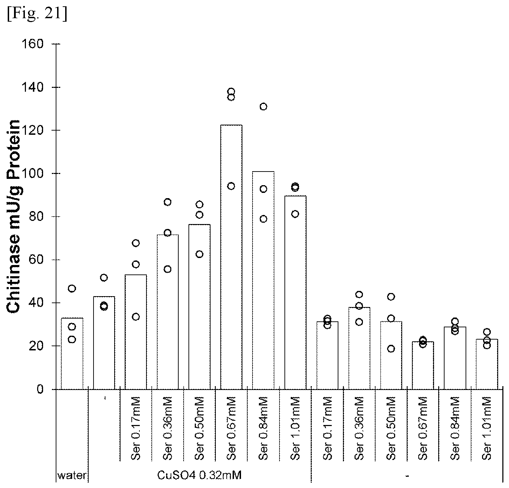

[Fig. 21] A graph showing influence of Ser concentration on disease resistance-inducing effect (chitinase activity) of concomitant use of Ser and copper sulfate in a cucumber plant.

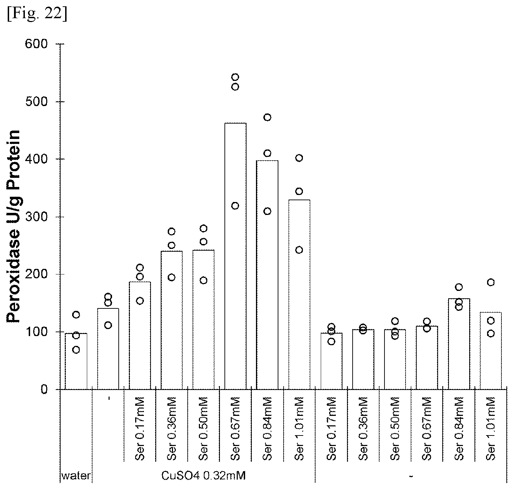

[Fig. 22] A graph showing influence of Ser concentration on disease resistance-inducing effect (peroxidase activity) of concomitant use of Ser and copper sulfate in a cucumber plant.

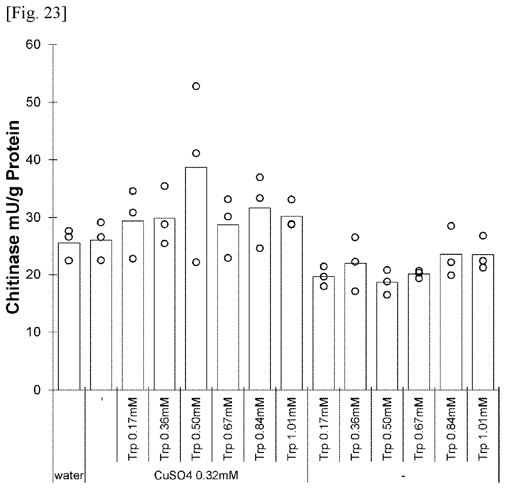

[Fig. 23] A graph showing influence of Trp concentration on disease resistance-inducing effect (chitinase activity) of concomitant use of Trp and copper sulfate in a cucumber plant.

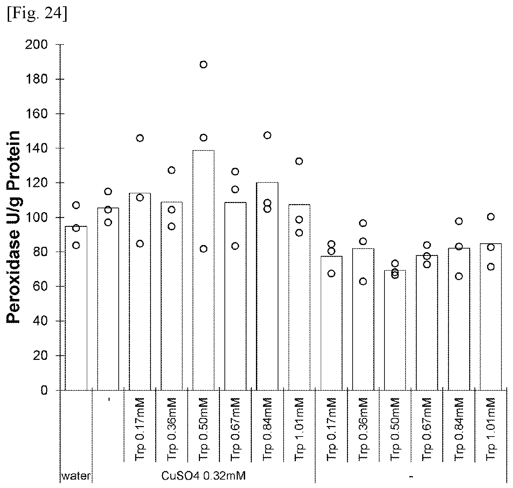

[Fig. 24] A graph showing influence of Trp concentration on disease resistance-inducing effect (peroxidase activity) of concomitant use of Trp and copper sulfate in a cucumber plant.

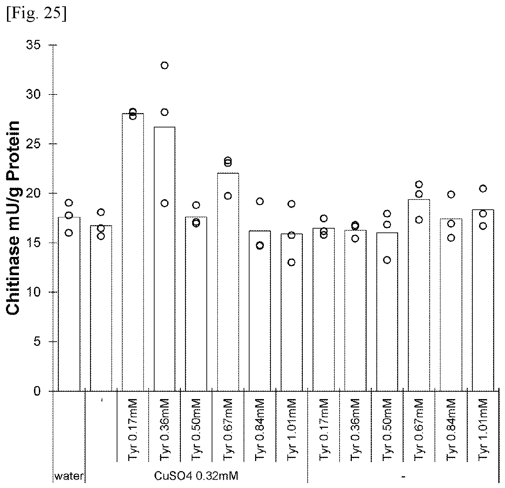

[Fig. 25] A graph showing influence of Tyr concentration on disease resistance-inducing effect (chitinase activity) of concomitant use of Tyr and copper sulfate in a cucumber plant.

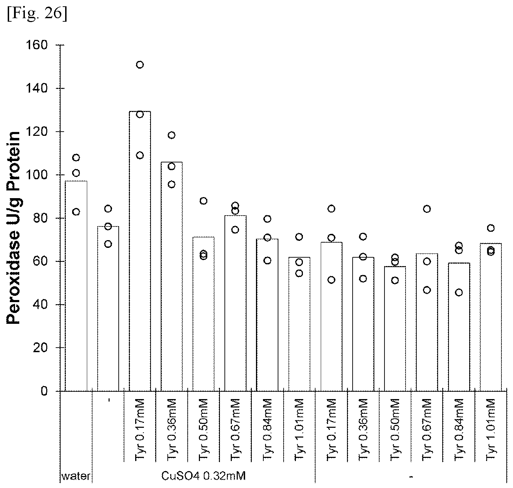

[Fig. 26] A graph showing influence of Tyr concentration on disease resistance-inducing effect (peroxidase activity) of concomitant use of Tyr and copper sulfate in a cucumber plant.

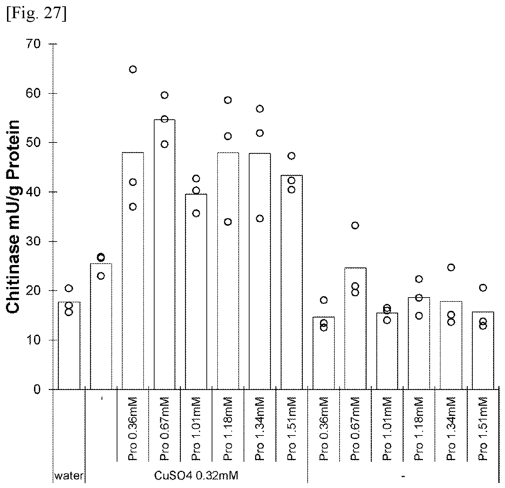

[Fig. 27] A graph showing influence of Pro concentration on disease resistance-inducing effect (chitinase activity) of concomitant use of Pro and copper sulfate in a cucumber plant.

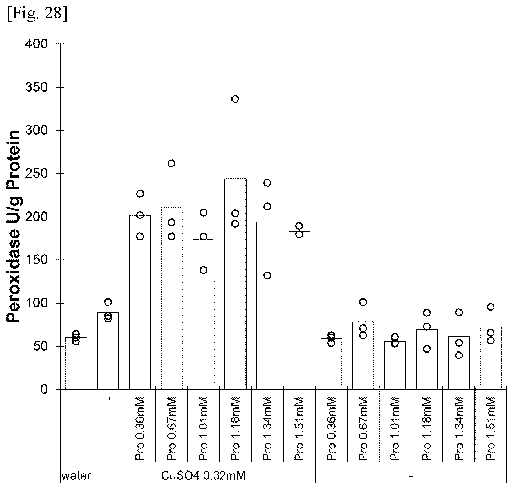

[Fig. 28] A graph showing influence of Pro concentration on disease resistance-inducing effect (peroxidase activity) of concomitant use of Pro and copper sulfate in a cucumber plant.

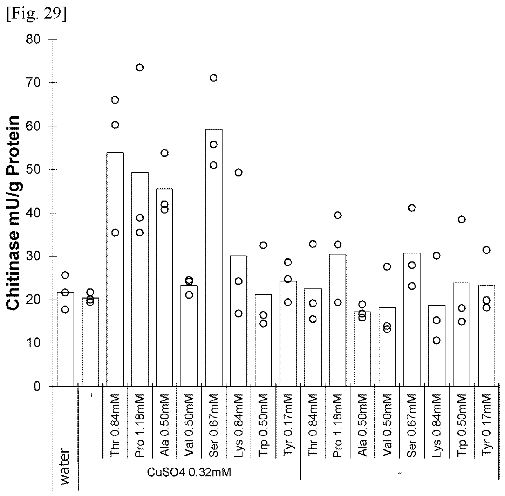

[Fig. 29] A graph showing disease resistance-inducing effect (chitinase activity) of concomitant use of copper sulfate and an amino acid of optimum concentration in a cucumber plant.

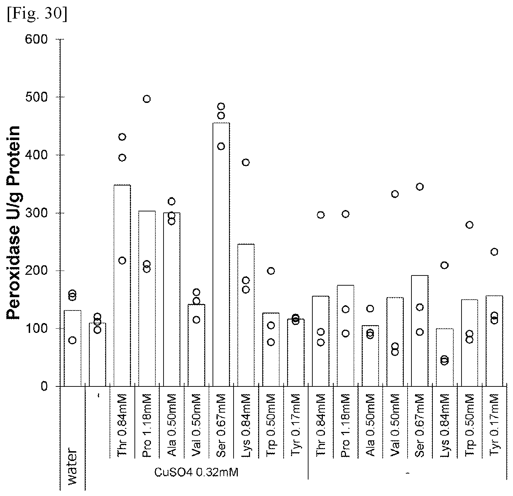

[Fig. 30] A graph showing disease resistance-inducing effect (peroxidase activity) of concomitant use of copper sulfate and an amino acid of optimum concentration in a cucumber plant.

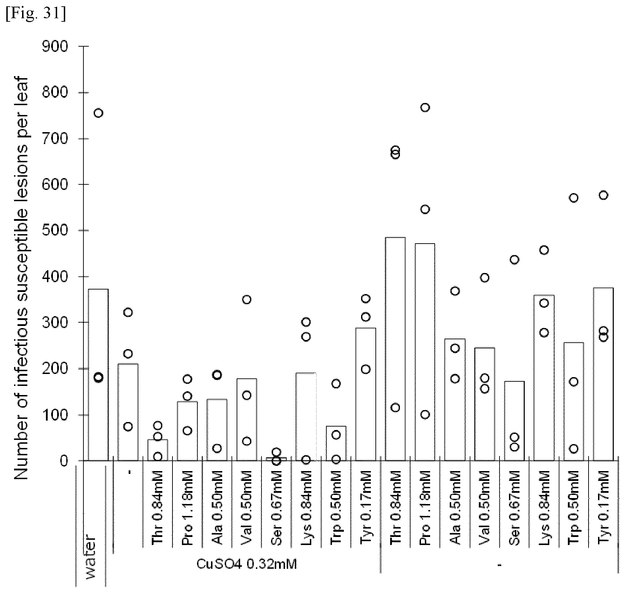

[Fig. 31] A graph showing disease control effect of concomitant use of copper sulfate and an amino acid for anthracnose in a cucumber plant.

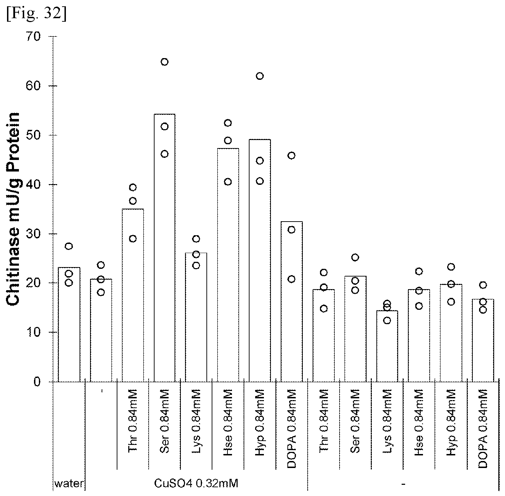

[Fig. 32] A graph showing disease resistance-inducing effect (chitinase activity) of concomitant use of copper sulfate and an amino acid having a hydroxyl group in a cucumber plant.

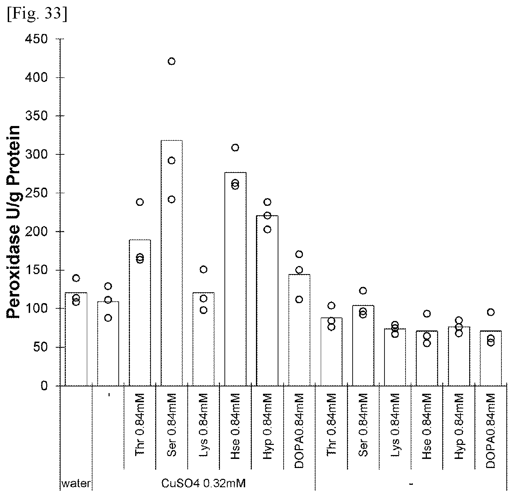

[Fig. 33] A graph showing disease resistance-inducing effect (peroxidase activity) of concomitant use of copper sulfate and an amino acid having a hydroxyl group in a cucumber plant.

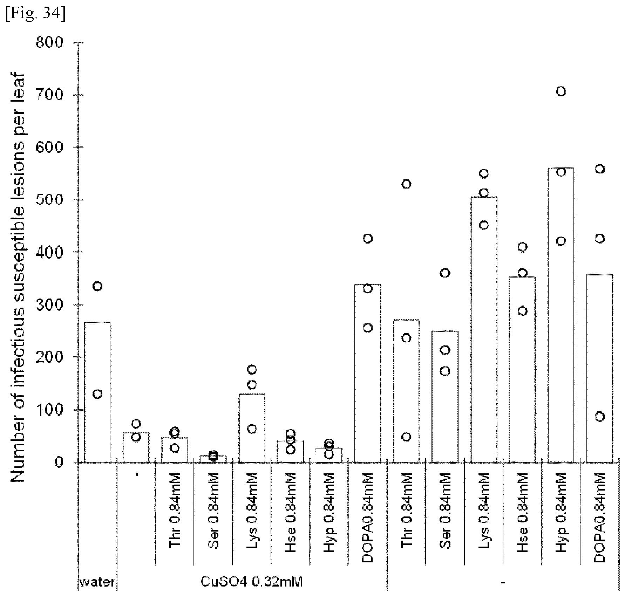

[Fig. 34] A graph showing disease control effect of concomitant use of copper sulfate and an amino acid having a hydroxyl group for anthracnose in a cucumber plant.

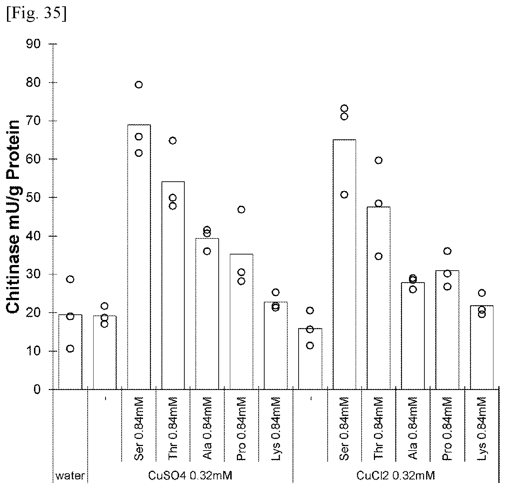

[Fig. 35] A graph showing disease resistance-inducing effect (chitinase activity) of concomitant use of copper sulfate or copper chloride and an amino acid in a cucumber plant.

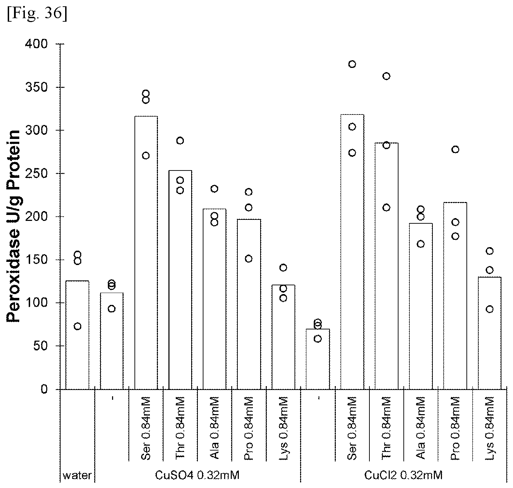

[Fig. 36] A graph showing disease resistance-inducing effect (peroxidase activity) of concomitant use of copper sulfate or copper chloride and an amino acid in a cucumber plant.

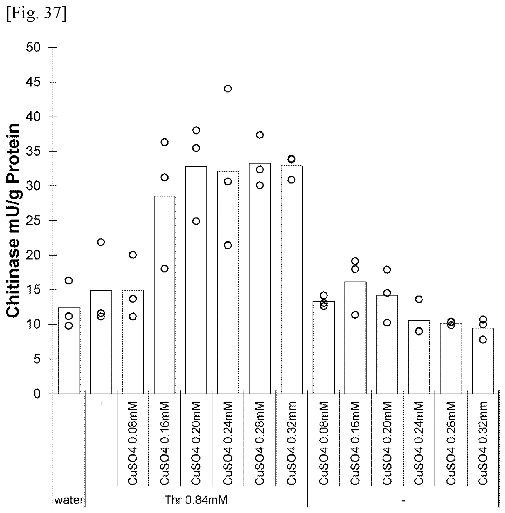

[Fig. 37] A graph showing influence of copper sulfate concentration on disease resistance-inducing effect (chitinase activity) of concomitant use of copper sulfate and an amino acid in a cucumber plant.

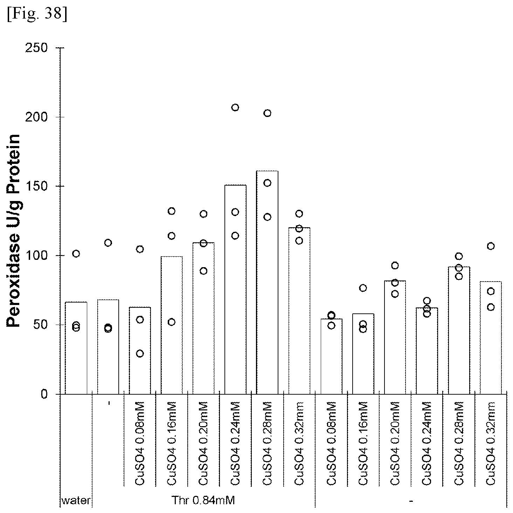

[Fig. 38] A graph showing influence of copper sulfate concentration on disease resistance-inducing effect (peroxidase activity) of concomitant use of copper sulfate and an amino acid in a cucumber plant.

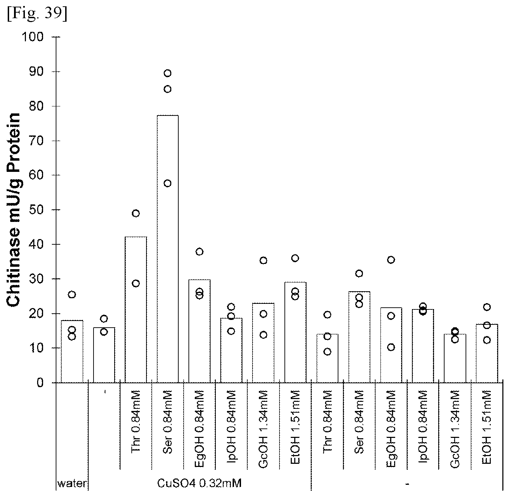

[Fig. 39] A graph showing disease resistance-inducing effect (chitinase activity) of concomitant use of copper sulfate and an alcohol in a cucumber plant.

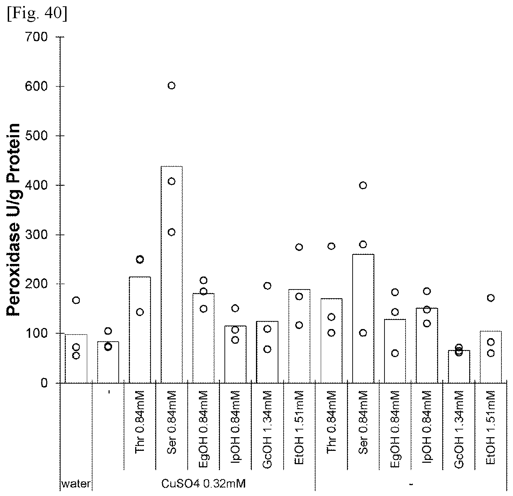

[Fig. 40] A graph showing disease resistance-inducing effect (peroxidase activity) of concomitant use of copper sulfate and an alcohol in a cucumber plant.

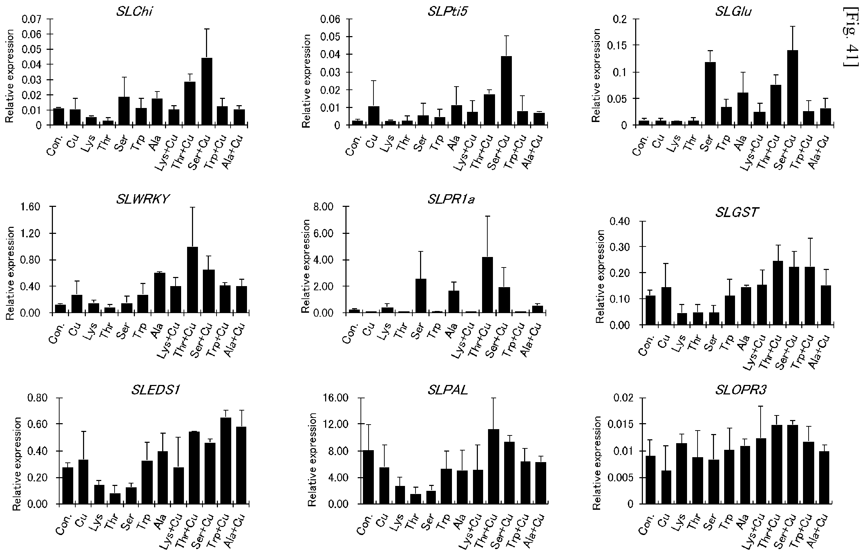

[Fig. 41] Graphs showing disease resistance gene expression-inducing effect of concomitant use of copper sulfate and an amino acid in a tomato plant.

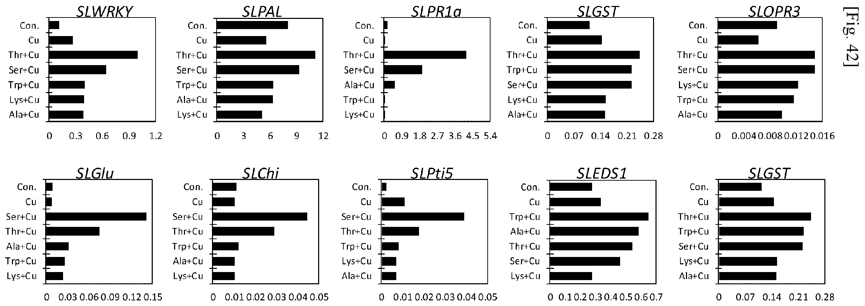

[Fig. 42] Graphs showing disease resistance gene expression-inducing effect of concomitant use of copper sulfate and an amino acid in a tomato plant.

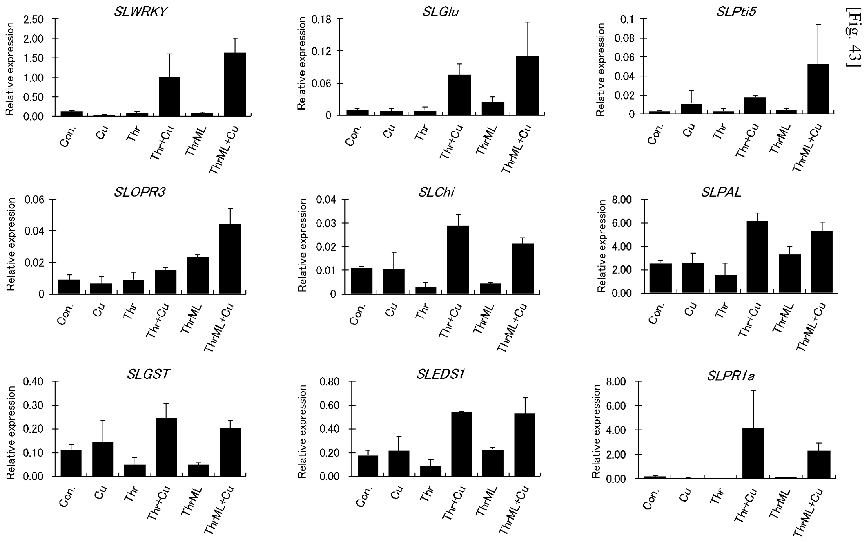

[Fig. 43] Graphs showing disease resistance gene expression-inducing effect of concomitant use of copper sulfate and threonine fermentation liquid in a tomato plant.

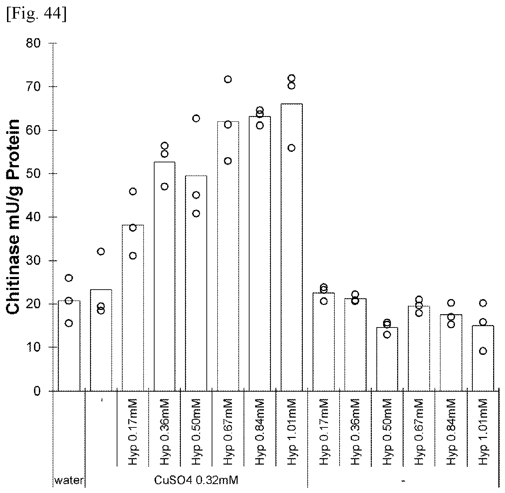

[Fig. 44] A graph showing influence of Hyp concentration on disease resistance-inducing effect (chitinase activity) of concomitant use of Hyp and copper sulfate in a cucumber plant.

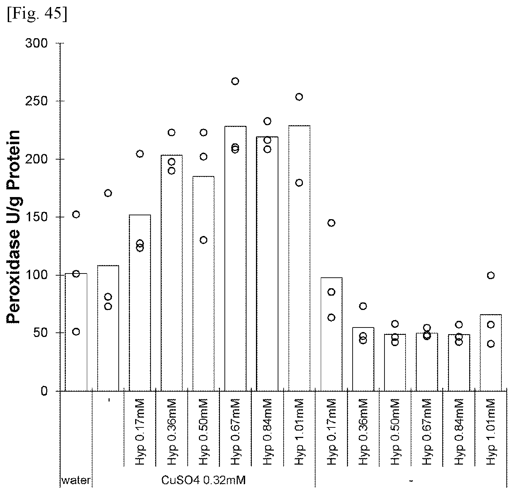

[Fig. 45] A graph showing influence of Hyp concentration on disease resistance-inducing effect (peroxidase activity) of concomitant use of Hyp and copper sulfate in a cucumber plant.

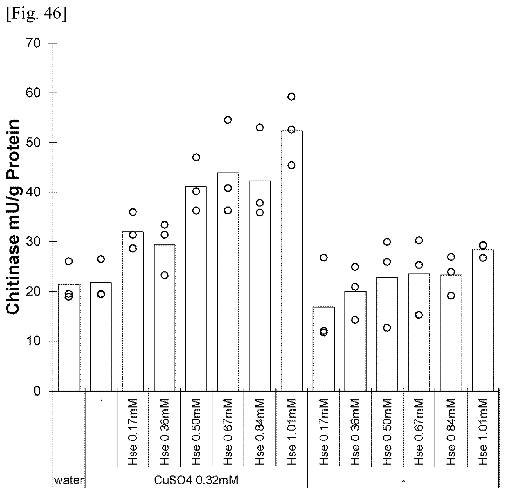

[Fig. 46] A graph showing influence of Hse concentration on disease resistance-inducing effect (chitinase activity) of concomitant use of Hse and copper sulfate in a cucumber plant.

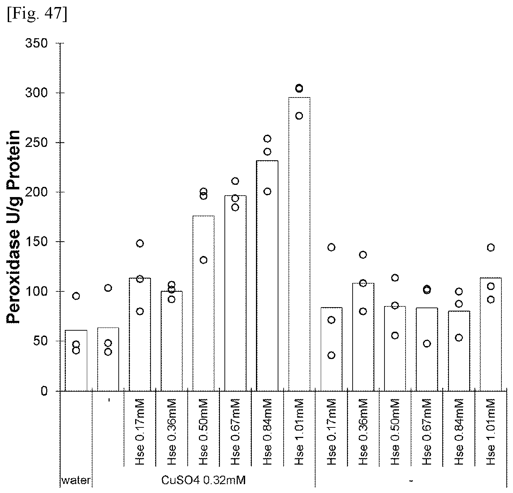

[Fig. 47] A graph showing influence of Hse concentration on disease resistance-inducing effect (peroxidase activity) of concomitant use of Hse and copper sulfate in a cucumber plant.

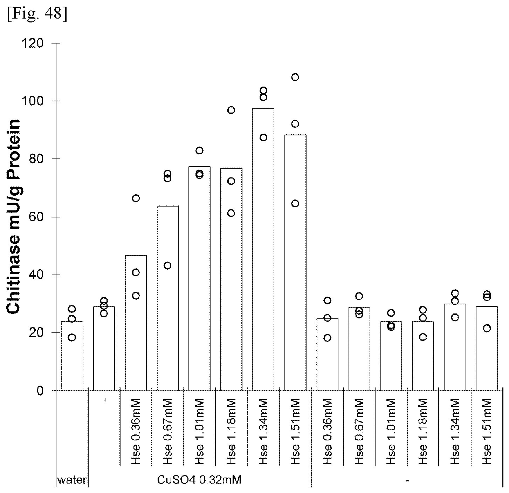

[Fig. 48] A graph showing influence of Hse concentration on disease resistance-inducing effect (chitinase activity) of concomitant use of Hse and copper sulfate in a cucumber plant.

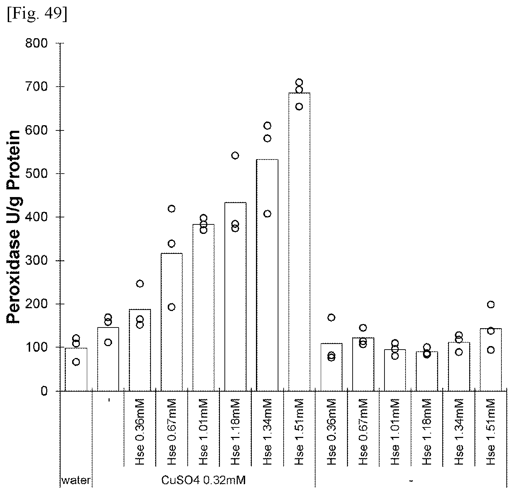

[Fig. 49] A graph showing influence of Hse concentration on disease resistance-inducing effect (peroxidase activity) of concomitant use of Hse and copper sulfate in a cucumber plant.

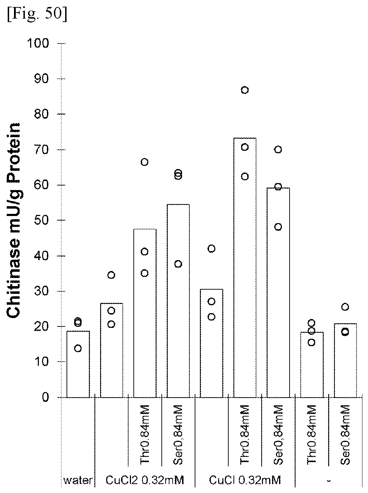

[Fig. 50] A graph showing disease resistance-inducing effect (chitinase activity) of concomitant use of copper chloride and an amino acid in a cucumber plant.

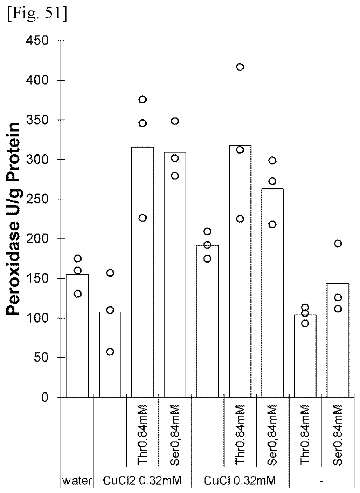

[Fig. 51] A graph showing disease resistance-inducing effect (peroxidase activity) of concomitant use of copper chloride and an amino acid in a cucumber plant.

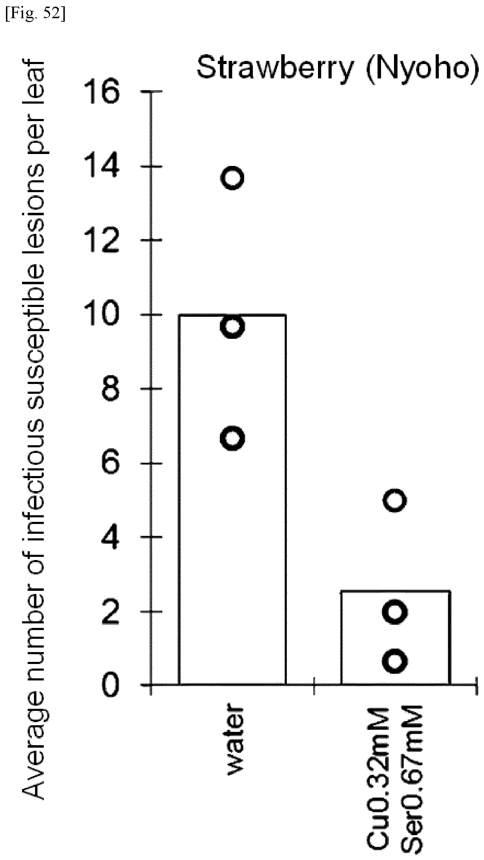

[Fig. 52] A graph showing disease control effect of concomitant use of copper sulfate and Ser for strawberry anthracnose.

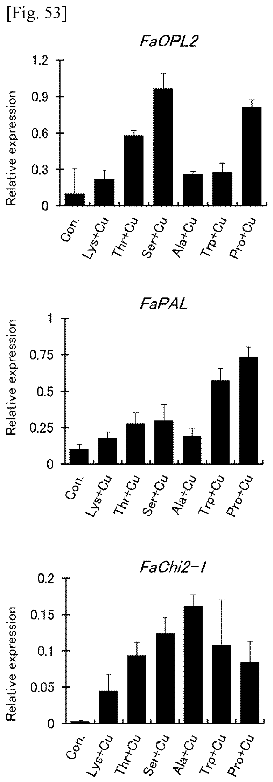

[Fig. 53] Graphs showing disease resistance gene expression-inducing effect of concomitant use of copper sulfate and an amino acid in a strawberry plant.

### Modes for Carrying out the Invention

Hereafter, the present invention will be explained in detail.

According to the method of the present invention, the following ingredients (A) and (B) are utilized:
(A) A copper compound;
(B) An amino acid.

The ingredients (A) and (B) may also be collectively referred to as "active ingredients".

By using the active ingredients, specifically, by applying the active ingredients to a plant, disease resistance can be induced in the plant. The disease of the plant may be controlled by induction of disease resistance in the plant.

Induction of disease resistance in a plant can be confirmed by using, for example, increase in expression of a gene involved in disease resistance as an index. That is, if expression of a gene that is involved in disease resistance increases when the active ingredients are used compared with that observed when the active ingredients are not used, it can be judged that the disease resistance is induced in the plant. Examples of a gene that is involved in disease resistance include genes encoding such proteins as peroxidase, chitinase, WRKY-type transcription factor, glucanase, Pto-interactor 5, glutathione S-transferase, enhanced disease susceptibility 1 protein, pathogenesis-related protein, phenylalanine ammonia lyase, and OPR 12-oxophytodienoate reductase. Increase in expression of a gene can be confirmed by, for example, measuring transcription amount of the gene (amount of mRNA), translation amount of the gene (amount of the protein encoded by the gene), or activity of the protein encoded by the gene. Examples of the method for measuring mRNA amount include northern hybridization and RT-PCR. Examples of the method for measuring protein amount include western blotting. The method for measuring protein activity can be appropriately chosen depending on various conditions such as type of target protein. Examples of the methods for measuring peroxidase activity and chitinase activity include, for example, the methods described in the section of Examples in this description.

Control of a disease of a plant can be confirmed by, for example, using relief of symptoms of the disease as an index. That is, if the symptoms of the disease are reduced when the active ingredients are used compared with those observed when the active ingredients are not used, it can be judged that the disease of the plant was controlled. For example, when the disease is a disease that generates spots in leaves, examples of the relief of the symptoms of the disease include reduction of number of spots and reduction of area of spots. The phrase "relief of symptoms of disease" also encompasses complete disappearance of the symptoms of the disease. The phrase "control of a disease" encompasses both control of a disease that may develop in the future, and control of an already developed disease. Examples of controlling a disease that may develop in the future include making the disease not to develop in the future, and reducing the symptoms of the disease when the disease develops in the future. Examples of controlling an already developed disease include reducing symptoms of the already developed disease and preventing aggravation of the symptoms or expansion of scale of the already developed disease.

### <1> Plant

Type of the plant is not particularly limited. The plant may be an arboreous plant or herb plant. Examples of the plant include *Gramineae* plants (rice plant, barley, wheat, corn, oats, lawn grass, etc.), *Solanaceae* plants (tomato, green pepper, eggplant, potato, etc.), *Cucurbitaceae* plants (cucumber, melon, Japanese pumpkin, etc.), *Leguminosae* · plants (green pea, soybean, kidney bean, alfalfa, peanut, broad bean, etc.), *Brassicaceae* plants (Japanese radish, Chinese cabbage, cabbage, komatsuna (*Brassica rapa* var. *perviridis*), turnip rape (*Brassica rapa* var. *amplexicaulis*)*,* bok choy (*Brassica rapa subsp. chinensis*), thale cress (*Arabidopsis thaliana*), etc.), *Rosaceae* plants (strawberry, apple, pear, etc.), *Moraceae* plants (mulberry, etc.), *Malvaceae* plants (cotton, etc.), *Umbelliferae* plants (carrot, parsley, celery, etc.), *Liliaceae* plants (spring onion (*Allium fistulosum*), onion, asparagus, etc.), *Compositae* plants (burdock, sunflower, *Chrysanthemum morifolium, Garland chrysanthemum,* safflower, lettuce, etc.), *Ericaceae* plants (blueberry, etc.), *Vitaceae* plants (grape, etc.), and *Rutaceae* plants (*Citrus unshiu,* lemon, *Citrus junos,* etc.). As the plant, those of *Solanaceae, Cucurbitaceae,* and *Rosaceae* can be especially mentioned. As the plant, tomato, cucumber, and strawberry are more especially mentioned. As the plant, one kind of plant or two or more kinds of plants may be the object. According to one embodiment, when the plant is a *Gramineae* plant, corn may be excluded from the target of the present invention.

### <2> Disease

Type of the disease is not particularly limited. Examples of the disease include those caused by molds, bacteria, protista, and viruses. Specific examples of the disease include powdery mildew, downy mildew, mosaic, fusarium wilt, gummy stem blight, bacterial wilt, shoot blight, bacterial leaf blight, zonate leaf spot, bud rot, bacterial bud rot, marginal blight, damping-off, slime mold, cercospora leaf mold, leaf mold, gray mold, pink mold rot, wilt, bacterial wilt, verticillium wilt, root rot, root rot wilt, soft rot, fruit rot, gray blight, leaf blotch, ring spot, leaf spot, bacterial leaf spot, bacterial angular leaf spot, black spot, black rot, brown spot, anthracnose, leaf spot, chlorosis, yellow leaf curl, sclerotinia rot, southern blight, fairy rings, blight, rice blast, brown spot, scab, powdery scab, fusarium head blight, brown spot, snow mould, rust, smut, foot rot, black scurf, sheath blight, early blight, purple stain, clubroot, bacterial black node, and black leg. As the disease, for example, a disease that is selected from those diseases mentioned above and can develop in a chosen plant can be a target. The target disease may consist of one kind of disease, or two or more kinds of diseases.

Examples of diseases that can develop in *Solanaceae* plants such as tomato include, for example, but not limited to, powdery mildew, mosaic, bacterial wilt, zonate leaf spot, damping-off, cercospora leaf mold, leaf mold, gray mold, pink mold rot, wilt, verticillium wilt, root rot, root rot wilt, soft rot, ring spot, leaf spot, bacterial leaf spot, black rot, brown spot, anthracnose, chlorosis, yellow leaf curl, sclerotinia rot, southern blight, blight, scab, powdery scab, black scurf, early blight, and black leg.

Examples of diseases that can develop in *Cucurbitaceae* plants such as cucumber include, for example, but not limited to, powdery mildew, downy mildew, mosaic, fusarium wilt, gummy stem blight, bacterial wilt, marginal blight, damping-off, gray mold, pink mold rot, verticillium wilt, root rot, soft rot, fruit rot, leaf spot, bacterial leaf spot, black spot, black rot, brown spot, anthracnose, sclerotinia rot, southern blight, and blight.

Examples of diseases that can develop in *Rosaceae* plants such as strawberry include, for example, but not limited to, powdery mildew, mosaic, bacterial wilt, shoot blight, bacterial leaf blight, bud rot, bacterial bud rot, damping-off, slime mold, gray mold, pink mold rot, wilt, bacterial wilt, root rot, root rot wilt, soft rot, fruit rot, gray blight, leaf blotch, bacterial leaf spot, bacterial angular leaf spot, black rot, anthracnose, leaf spot, chlorosis, sclerotinia rot, southern blight, fairy rings, and blight.

### <3> Active ingredients

### <3-1> Copper compound (ingredient (A))

The ingredient (A) is a copper compound. The copper compound is not particularly limited so long as a compound containing copper as a constituent is chosen. The copper compound may be an organic copper compound or inorganic copper compound. Examples of the copper compound include copper salts. Examples of the copper salts include salts of copper with an inorganic acid and salts of copper with an organic acid. Specific examples of the copper salt include, for example, copper sulfate, copper nitrate, copper carbonate, copper phosphate, copper pyrophosphate, copper arsenate, copper oxalate, copper citrate, copper benzoate, copper fumarate, copper tartrate, copper lactate, copper malate, copper formate, copper acetate, copper propionate, copper octanoate, copper decanoate, copper palmitate, copper stearate, copper oleate, copper linoleate, copper gluconate, copper glutamate, copper adipate, copper borate, copper methanesulfonate, copper sulfamate, copper chloride, copper bromide, copper sulfide, copper oxide, and copper hydroxide. As the copper salt, copper sulfate and copper chloride can be especially mentioned. As the copper salt, copper sulfate can be further especially mentioned. The valence of copper in these copper compounds is not particularly limited. As for the valence of copper, copper may be, for example, monovalent or divalent copper. That is, examples of copper sulfate include, for example, copper(I) sulfate (Cu₂SO₄) and copper(II) sulfate (CuSO₄). Examples of copper chloride include, for example, copper(I) chloride (CuCl) and copper(II) chloride (CuCl₂). The copper compound may be an anhydride, hydrate, or mixture of these, unless especially mentioned. For example, examples of hydrate of copper(II) sulfate include copper(II) sulfate pentahydrate. The copper compound may be in any form such as the form of ion at the time of use. As the copper compound, one kind of copper compound may be used, or two or more kinds of copper compounds may be used in combination.

As the copper compound, a commercial product may be used, or a copper compound obtained by an appropriate production method may be used. The method for producing the copper compound is not particularly limited. The copper compound can be produced by, for example, a known method. The copper compound may be purified to a desired extent or may not be purified. That is, as the copper compound, a purified product may be used, or a material containing a copper compound may be used. As the copper compound, for example, a material having a copper compound content of 1% (w/w) or higher, 5% (w/w) or higher, 10% (w/w) or higher, 30% (w/w) or higher, 50% (w/w) or higher, 70% (w/w) or higher, 90% (w/w) or higher, or 95% (w/w) or higher may be used.

### <3-2> Amino acid (ingredient (B))

The ingredient (B) is an amino acid having a hydroxyl group (OH group) and tryptophan. The number of the hydroxyl group is not particularly limited. The number of the hydroxyl group may be, for example, one. The amino acid having a hydroxyl group is a non-aromatic amino acid. Examples of the non-aromatic amino acids having a hydroxyl group include threonine, serine, homoserine, and hydroxyproline. As the amino acid, threonine, serine, homoserine, hydroxyproline, and tryptophan can be especially mentioned. As the amino acid, threonine, serine, homoserine, and hydroxyproline can be further especially mentioned. As the amino acid, threonine, serine, homoserine, and hydroxyproline can still further especially be mentioned. As amino acid, threonine and serine can be particularly mentioned. The amino acid may be a D-isomer, L-isomer, or a mixture of those, unless especially indicated. The ratio of D-isomer and L-isomer in such a mixture is not particularly limited. The ratio of D-isomer or L-isomer in such a mixture may be, for example, 20 to 80%, 30 to 70%, 40 to 60%, or 45 to 55% in terms of molar ratio. The amino acid may be, especially, an L-isomer. When a D-isomer or L-isomer of an amino acid is chosen, it is sufficient that the D-isomer or L-isomer of the amino acid is used as the active ingredient, but concomitant use of the L-isomer or D-isomer of the amino acid is not excluded. In such a case, the concomitantly used L-isomer or D-isomer of the amino acid (namely, either one isomer not chosen as the active ingredient) is not regarded as the ingredient (B) (that is, it is regarded as an ingredient other than the active ingredients). The amino acid may be a free amino acid, a salt thereof, or a mixture of those, unless especially mentioned. Examples of the salt of amino acid include ammonium salts, salts with an alkali metal, salts with an alkaline earth metal, and salts with an organic amine as salts with an acidic group such as carboxyl group. Examples of the salt of amino acid also include salts with an inorganic acid and salts with an organic acid as salts with a basic group. The amino acid may be an anhydride, hydrate, or a mixture of those, unless especially mentioned. The amino acid may be in any form such as the form of ion at the time of use. As the amino acid, one kind of amino acid may be used, or two or more kinds of amino acids may be used in combination.

As the amino acid, a commercial product may be used, or an amino acid obtained by an appropriate production method may be used. The method for producing the amino acid is not particularly limited. The amino acid can be produced by, for example, a known method. Specifically, the amino acid can be produced by, for example, chemical synthesis, enzymatic reaction, fermentation, extraction, or a combination of those. The amino acid may be purified to a desired extent or may not be purified. That is, as the amino acid, a purified product may be used, or a material containing an amino acid may be used. Specific examples of the material containing an amino acid include, for example, fermentation products, such as culture broth, cells, and culture supernatant, obtained by culturing a microorganism having an ability to produce the amino acid; agricultural, fishery, and livestock products containing the amino acid; and processed products of these. Examples of the processed products include those obtained by subjecting a material such as the fermentation products mentioned above to concentration, dilution, drying, fractionation, extraction, purification, or the like. As the amino acid, for example, a material having an amino acid content of 1% (w/w) or higher, 5% (w/w) or higher, 10% (w/w) or higher, 30% (w/w) or higher, 50% (w/w) or higher, 70% (w/w) or higher, 90% (w/w) or higher, or 95% (w/w) or higher may be used.

### <4> Composition used in the present invention

The composition used in the present invention is a composition containing the active ingredients (namely, the aforementioned ingredients (A) and (B)). The composition used in the present invention can be used by being applied to a plant. Examples of the method for using the composition used in the present invention will be explained in detail in the section of "Method of the present invention". By using the composition used in the present invention, specifically, by applying the composition used in the present invention to a plant, disease resistance can be induced in the plant. That is, the composition used in the present invention may be a composition for inducing disease resistance in a plant. The composition for inducing disease resistance in a plant and the composition for controlling a disease of a plant are also referred to as "disease resistance inducer for plants", and "disease control agent for plants", respectively. A disease of a plant may be controlled by induction of disease resistance in the plant.

The constitution of the composition used in the present invention is not particularly limited, so long as the composition used in the present invention contains the active ingredients, and the desired effect can be obtained. Types and contained amounts of the ingredients contained in the composition used in the present invention can be appropriately chosen according to various conditions such as type, cultivation method, and growth stage of the target plant, type and severity of symptoms of the target disease, and the method for using the composition used in the present invention.

The composition used in the present invention may consist of the active ingredients, or may contain an ingredient other than the active ingredients. Examples of the ingredient other than the active ingredients include, for example, ingredients usually used for agricultural chemicals, fertilizer, pharmaceuticals, and so forth. Specific examples of such ingredients include additives such as excipient, binder, disintegrating agent, lubricant, stabilizer, diluent, surfactant, spreading agent, pH adjustor, water, alcohol, vitamin, and mineral. Specific examples of the spreading agent include, for example, Applauch BI^{™} (Kao), Mix Power^{™} (Syngenta Japan), Squash^{™} (MARUWA Biochemical), and so forth. As the ingredient other than the active ingredients, one kind of ingredient may be used, or two or more kinds of ingredients may be used. According to one embodiment, the composition in which one or more kinds of ingredients selected from zinc, manganese, boron, and a water-soluble derivative of vitamin K, for example, all of these four kinds, are used together with the active ingredients, i.e., the composition used in the present invention containing one or more kinds of ingredients selected from zinc, manganese, boron, and a water-soluble derivative of vitamin K, for example, all of these four kinds, may be excluded from the scope of the composition used in the present invention. Zinc, manganese, and boron mentioned here may be, especially, zinc(II) sulfate heptahydrate, manganese sulfate, and boric acid, respectively. The expression that "the composition used in the present invention contains zinc, manganese, boron, or a water-soluble derivative of vitamin K" may mean that, especially, the composition used in the present invention contains 5 to 15% (w/w) of zinc (especially zinc(II) sulfate heptahydrate), 3 to 10% (w/w) of manganese (especially manganese sulfate), 1 to 3% (w/w) of boron (especially boric acid), or 0.1 to 1% (w/w) of a water-soluble derivative of vitamin K. The composition used in the present invention may be made into a formulation as required. Dosage form of the composition used in the present invention is not particularly limited. The dosage form of the composition used in the present invention can be appropriately chosen according to various conditions such as the method for using the composition used in the present invention. Examples of the dosage form include, for example, solution, suspension, powder, tablet, pill, capsule, and paste.

The total contained amount of the active ingredients in the composition used in the present invention, for example, may be 0.001% (w/w) or higher, 0.002% (w/w) or higher, 0.005% (w/w) or higher, 0.01% (w/w) or higher, 0.02% (w/w) or higher, 0.05% (w/w) or higher, 0.1% (w/w) or higher, 0.2% (w/w) or higher, 0.5% (w/w) or higher, 1% (w/w) or higher, 2% (w/w) or higher, 5% (w/w) or higher, or 10% (w/w) or higher, may be 100% (w/w) or lower, 99.9% (w/w) or lower, 70% (w/w) or lower, 50% (w/w) or lower, 30% (w/w) or lower, 20% (w/w) or lower, 15% (w/w) or lower, 10% (w/w) or lower, 5% (w/w) or lower, 2% (w/w) or lower, 1% (w/w) or lower, 0.5% (w/w) or lower, 0.2% (w/w) or lower, 0.1% (w/w) or lower, 0.05% (w/w) or lower, or 0.02% (w/w) or lower, or may be in a range defined by any uncontradictory combination of these ranges.

In the composition used in the present invention, ratio of the contained amount of the ingredient (B) to the contained amount of the ingredient (A) (contained amount of the ingredient (B)/contained amount of the ingredient (A)), for example, may be 0.1 or higher, 0.2 or higher, 0.5 or higher, 1 or higher, or 2 or higher, may be 10 or lower, 9 or lower, 8 or lower, 7 or lower, 6 or lower, 5 or lower, 4 or lower, 3 or lower, 2 or lower, or 1 or lower in terms of molar ratio, or may be in a range defined by any uncontradictory combination of these ranges. The ratio of the contained amount of the ingredient (B) to the contained amount of the ingredient (A) (contained amount of the ingredient (B)/contained amount of the ingredient (A)) may be specifically, for example, 0.1 to 10, 0.2 to 7, or 0.5 to 6 in terms of molar ratio. The ratio of the contained amount of the ingredient (B) to the contained amount of the ingredient (A) (contained amount of the ingredient (B)/contained amount of the ingredient (A)) may be more specifically, for example, in terms of molar ratio, 2.5 to 5.3 when the ingredient (B) is threonine, 1.0 to 3.3 when the ingredient (B) is serine, or 1.5 to 1.7 when the ingredient (B) is tryptophan.

The contained amount of each active ingredient in the composition used in the present invention can be determined so that, for example, the total contained amount and ratio of the contained amounts of the active ingredients are within the ranges thereof exemplified above.

The contained amount of each active ingredient in the composition used in the present invention can also be determined so that, for example, the concentrations of the respective active ingredients should be in predetermined ranges at the time of use of the composition used in the present invention. The concentrations of the active ingredients at the time of use of the composition used in the present invention are also referred to as "concentrations of the active ingredients for use" or " concentrations of the active ingredients for application". The concentrations of the ingredient (A) and the ingredient (B) for use, for example, may each be 0.01 mM or higher, 0.02 mM or higher, 0.05 mM or higher, 0.1 mM or higher, 0.2 mM or higher, 0.3 mM or higher, 0.5 mM or higher, 0.7 mM or higher, 1 mM or higher, 2 mM or higher, or 5 mM or higher, may each be 20 mM or lower, 10 mM or lower, 5 mM or lower, 2 mM or lower, 1 mM or lower, 0.5 mM or lower, or 0.2 mM or lower, or may each be in a range defined by any uncontradictory combination of these ranges. Specifically, the concentration of the ingredient (A) for use may be, for example, 0.01 to 5 mM, 0.02 to 1 mM, or 0.05 to 0.5 mM. Although the concentration of the copper compound for use is generally 10 to 20 mM in the fungicide called Bordeaux mixture, the concentration of the ingredient (A) for use may be lower than it according to the present invention. The concentration of the ingredient (B) for use may be specifically, for example, 0.02 to 10 mM, 0.05 to 5 mM, or 0.1 to 2 mM. The concentrations of the active ingredients for use exemplified above may be, especially, concentrations in case that the composition used in the present invention is used in the form of a liquid.

When a material containing the active ingredient is used, the amount of the active ingredient (for example, contained amount (concentration) or amount for use) shall be calculated on the basis of amount of the active ingredient itself contained in the material. When the ingredient (B) is in the form of a salt or hydrate, the amount (for example, contained amount (concentration) or amount for use) of the ingredient (B) shall be calculated on the basis of a mass of the equimolar amount of the corresponding free compound converted from the mass of the salt or hydrate.

The active ingredients and the other ingredient may be contained in the composition used in the present invention as a mixture, or may be separately contained in the composition used in the present invention as respective ingredients or an arbitrary combination of the ingredients. For example, the composition used in the present invention may be provided as a set of the ingredient (A) and ingredient (B) separately packaged. In such a case, the ingredient (A) and ingredient (B) can be appropriately concomitantly applied to a plant at the time of use.

### <5> Method of the present invention

The method of the present invention is a method comprising applying the active ingredients (namely, the ingredients (A) and (B) mentioned above) to a plant. According to the method of the present invention, specifically, by applying the active ingredients to a plant, disease resistance can be induced in the plant. That is, the method of the present invention may be a method for inducing disease resistance in a plant. A disease of a plant may be controlled by induction of disease resistance in a plant.

The active ingredients can be applied to a plant by, for example, using the composition used in the present invention (namely, by applying the composition used in the present invention). That is, one embodiment of the method of the present invention may be, for example, a method comprising applying the composition used in the present invention to a plant. The phrase "applying the active ingredients to a plant" also encompasses applying the composition used in the present invention to a plant. The composition used in the present invention can be applied to a plant, for example, as it is, or after it is diluted, dispersed or dissolved with a liquid such as water, physiological saline, buffer, and alcohol, as required. Namely, for example, concentration of the composition used in the present invention can be adjusted as required so that the concentrations of the active ingredients for use exemplified above can be obtained, and then the composition can be applied to a plant. The composition used in the present invention can be applied to a plant in the form of, especially, a liquid. The active ingredients may be applied to a plant as a mixture prepared beforehand, or may each be separately applied to a plant. That is, for example, when the active ingredients are contained in the composition used in the present invention as a mixture, the active ingredients can be applied to a plant as a mixture prepared beforehand by applying the composition used in the present invention to the plant. Furthermore, for example, when the active ingredients are each separately contained in the composition used in the present invention, the active ingredients may be applied to a plant after they are mixed, or may each be separately applied to the plant. When the active ingredients are each separately applied to a plant, the active ingredients may be or may not be simultaneously applied to the plant. When the active ingredients are not simultaneously applied to a plant, the order of the applications of the ingredient (A) and ingredient (B) is not particularly limited. When the active ingredients are not simultaneously applied to a plant, interval of the applications of the ingredient (A) and ingredient (B) is not particularly limited so long as the desired effect can be obtained. The interval of the applications of the ingredient (A) and ingredient (B) may be, for example, 7 days or shorter, 5 days or shorter, 3 days or shorter, or 1 day or shorter. The composition used in the present invention may be used together with another ingredient. To the other ingredient, the explanations about the ingredient other than the active ingredients mentioned in the explanations of the composition used in the present invention can be applied. That is, the composition used in the present invention may be used together with, for example, an additive such as spreading agent.

The method for applying the composition used in the present invention is not particularly limited so long as the desired effect can be obtained. The method for applying the composition used in the present invention can be appropriately chosen depending on various conditions such as type, cultivation method, and growth stage of the target plant, and type and severity of symptoms of the target disease. The composition used in the present invention can be applied to a plant by, for example, a usual method for applying agricultural chemicals and fertilizers to a plant. The composition used in the present invention may be applied to, for example, a plant body, or soil or medium used for cultivation of a plant, or may be applied to a combination of them. Examples of the method for applying the composition to a plant body include spraying or spreading the composition on a plant body, and immersing a plant body into the composition. The composition used in the present invention may be applied to the whole plant body, or may be applied to a part of plant body. The composition used in the present invention may be applied to, for example, the whole terrestrial part of a plant body. Examples of the part of plant body include leaf, stem, trunk, root, and fruit. When the composition used in the present invention is applied to a leaf, it may be applied to only one of the front surface and the back surface of the leaf, or may be applied to both surfaces. Specific examples of application to a plant body include, for example, foliar sprinkling and root immersion. Example of application to soil or medium include sprinkling to soil or medium, irrigation into soil or medium, and mixing with soil or medium. Application to soil or medium can be performed so that the active ingredients can reach the rhizosphere of the plant.

Application time of the composition used in the present invention is not particularly limited so long as the desired effect can be obtained. The application time of the composition used in the present invention can be appropriately chosen depending on various conditions, such as type, cultivation method, and growth stage of the target plant, and type and severity of symptoms of the target disease. The composition used in the present invention can be applied to a plant, for example, before a disease develops. By applying the composition used in the present invention to a plant before a disease develops, for example, the disease that may develop in the future can be controlled. The composition used in the present invention can also be applied to a plant, for example, after a disease has developed. By applying the composition used in the present invention to a plant after a disease has developed, for example, the already developed disease can be controlled. The composition used in the present invention may be applied once, or two or more times. The composition used in the present invention may be applied intermittently or continuously.

Application amount of the composition used in the present invention is not particularly limited so long as the desired effect can be obtained. The application amount of the composition used in the present invention can be appropriately determined depending on various conditions such as type, cultivation method, and growth stage of the target plant, type and severity of symptoms of the target disease, and application method and application time of the composition used in the present invention.

The application amount of the composition used in the present invention, as application amount of, for example, the composition used in the present invention in the form of a liquid containing the active ingredients at such concentrations for use as exemplified above, may be 100 L/hectare or larger, 200 L/hectare or larger, 500 L/hectare or larger, 1000 L/hectare or larger, 1500 L/hectare or larger, 3000 L/hectare or larger, or 5000 L/hectare or larger, may be 10000 L/hectare or smaller, 8000 L/hectare or smaller, 7000 L/hectare or smaller, 5000 L/hectare or smaller, 3000 L/hectare or smaller, or 1500 L/hectare or smaller, or may be in a range defined by any uncontradictory combination of these ranges. The application amount of the composition used in the present invention, as application amount of, for example, the composition used in the present invention in the form of a liquid containing the active ingredients at such concentrations for use as exemplified above, may specifically be, for example, 100 to 10000 L/hectare, 200 to 8000 L/hectare, 500 to 5000 L/hectare, or 1000 to 3000 L/hectare. The application amount of the composition used in the present invention can be determined by taking into consideration not only application area (two-dimensional factor), but also a three-dimensional factor. That is, the application amount of the composition used in the present invention can be determined according to, for example, height of the plant to which the composition used in the present invention is applied (for example, sprinkled). The application amount of the composition used in the present invention, as application amount of, for example, the composition used in the present invention in the form of a liquid containing the active ingredients at such concentrations for use as exemplified above, may specifically be, for example, 1000 to 1500 L/hectare for plants of from ground surface height to knee height, 1500 to 3000 L/hectare for plants of from knee height to human height, 3000 to 5000 L/hectare for plants of from human height to a height of 2 m, or 5000 to 7000 L/hectare for plants of a height of 2 m or higher.

The application amount of the composition used in the present invention can also be determined so that, for example, the application amount of each active ingredient should be in a predetermined range. The application amounts of the ingredient (A) and the ingredient (B), for example, may each be 0.01 mol/hectare or larger, 0.02 mol/hectare or larger, 0.05 mol/hectare or larger, 0.1 mol/hectare or larger, 0.2 mol/hectare or larger, 0.3 mol/hectare or larger, 0.4 mol/hectare or larger, 0.5 mol/hectare or larger, 0.7 mol/hectare or larger, or 1 mol/hectare or larger, may each be 20 mol/hectare or smaller, 10 mol/hectare or smaller, 6 mol/hectare or smaller, 5 mol/hectare or smaller, 4 mol/hectare or smaller, 3 mol/hectare or smaller, 2 mol/hectare or smaller, 1 mol/hectare or smaller, 0.5 mol/hectare or smaller, or 0.2 mol/hectare or smaller, or may each be in a range defined by any uncontradictory combination of these ranges. The application amount of each active ingredient can also be determined according to, for example, height of a plant to which the composition used in the present invention is applied (for example, sprinkled). The application amount of the ingredient (A) may specifically be, for example, 0.01 to 0.5 mol/hectare for plants of from ground surface height to knee height, 0.2 to 1 mol/hectare for plants of from knee height to human height, 0.4 to 2 mol/hectare for plants of from human height to a height of 2 m, or 0.7 to 3 mol/hectare for plants of a height of 2 m or higher. The application amount of the ingredient (B) may specifically be, for example, 0.02 to 2 mol/hectare for plants of from ground surface height to knee height, 0.3 to 4 mol/hectare for plants of from knee height to human height, 0.7 to 6 mol/hectare for plants of from human height to a height of 2 m, or 1 to 10 mol/hectare for plants of a height of 2 m or larger.

The application amounts of the composition used in the present invention exemplified above may be application amounts in the case of, especially, applying the composition used in the present invention to a plant by sprinkling it to a plant body such as foliar sprinkling, or sprinkling to soil or medium.

The explanations about the application method of the composition used in the present invention mentioned above can be applied to any other cases of applying the active ingredients to a plant. That is, the active ingredients may be applied to a plant, for example, at such concentrations for use as exemplified above. The active ingredients may also be applied to a plant, for example, in such application amounts of the active ingredients exemplified above. The active ingredient may be, for example, prepared as a composition, such as a liquid composition, containing the active ingredients, and applied to a plant. The explanations of the composition used in the present invention can be applied to the composition containing the active ingredients. The active ingredients can be applied to a plant in the form of, especially, a liquid. That is, specifically, the active ingredients may be prepared as, for example, a liquid composition containing the active ingredients at such concentrations for use as exemplified above, and applied to a plant. The active ingredients may be applied to a plant in the form of a mixture prepared beforehand, or may be separately applied to a plant. That is, for example, a composition such as a liquid composition containing both the ingredient (A) and the ingredient (B) can be prepared, and applied to a plant. Furthermore, a composition such as a liquid composition containing the ingredient (A) and a composition such as a liquid composition containing the ingredient (B) can each be prepared, and applied to a plant. The active ingredients may be used, for example, together with another ingredient such as spreading agent. According to one embodiment, the method in which one or more kinds of ingredients selected from zinc, manganese, boron, and a water-soluble derivative of vitamin K, for example, all of these four kinds, are used together with the active ingredients, i.e., the method of the present invention in which one or more kinds of ingredients selected from zinc, manganese, boron, and a water-soluble derivative of vitamin K, for example, all of these four kinds, are applied to a plant may be excluded from the scope of the method of the present invention. Zinc, manganese, and boron mentioned here may be, especially, zinc(II) sulfate heptahydrate, manganese sulfate, and boric acid, respectively. The expression that "applying zinc, manganese, boron, or a water-soluble derivative of vitamin K to a plant" may mean, especially, applying 5 to 15% (w/w) of zinc (especially zinc(II) sulfate heptahydrate), 3 to 10% (w/w) of manganese (especially manganese sulfate), 1 to 3% (w/w) of boron (especially boric acid), or 0.1 to 1% (w/w) of a water-soluble derivative of vitamin K to a plant.

By cultivating a plant using the method of the present invention, a plant body can be obtained. Therefore, one embodiment of the method of the present invention may be a method for producing a plant body. More specifically, one embodiment of the method of the present invention may be a method for producing a plant body, which comprises cultivating a plant with applying the active ingredients (namely, the ingredients (A) and (B) mentioned above) to the plant. The cultivation of a plant can be performed by, for example, a usual method for cultivating a plant, except that the composition used in the present invention is applied. The plant body can be collected as required. That is, the method of the present invention may further comprise collecting a plant body. The plant body to be collected may be the whole plant body, or a part of plant body. Examples of the part of plant body include leaf, stem, trunk, root, and fruit.

### Examples

Hereafter, the present invention will be more specifically explained with reference to examples. All the amino acids used in the following examples are L-amino acids.

### [Example 1] Evaluation of disease resistance-inducing effect of concomitant use of copper sulfate and amino acid in cucumber plant (1)

In this example, copper sulfate and each of various amino acids were applied in combination to first foliage leaves of cucumber plants, and disease resistance-inducing effect thereof was evaluated by using activities of chitinase and peroxidase, which are disease resistance-related enzymes, as indexes.

### (1) Cultivation of plant body and sprinkling of treatment solution

Cucumber (variety "Yotsuba") seeds were seeded on mixed soil of compost for horticulture (Kumiai Nippi Engei Baido No. 1, JA) and vermiculite in a volume ratio of 3:1, and cultivation was performed for two weeks. The temperature in the cultivation warehouse was 23 to 25°C, the circadian conditions included 14 hours of light period, and light intensity was about 300 µmol·m⁻²s⁻¹. As the treatment solution, aqueous solutions containing a combination of 0.32 mM copper(II) sulfate and 0.84 mM each amino acid, aqueous solution containing 0.32 mM copper(II) sulfate alone, aqueous solutions containing 0.84 mM each amino acid alone, and ultrapure water as a mock treatment solution were prepared. Before use of each treatment solution in the experiment, Applauch BI (Kao, "Applauch BI" is a registered trademark of Kao) was added as a spreading agent at a 1/1000 concentration to each treatment solution. Each treatment solution was sprinkled to a first foliage leaf in a volume of about 1 mL/100 cm² with a sprayer. Forty-eight hours after the sprinkling treatment, a center part of the leaf in the shape of 1.5-cm square was collected as a sample for enzyme activity measurement, immediately frozen with liquid nitrogen, and stored at -80°C. The test was carried out in triplicate (n = 3) for each treatment solution.

### (2) Enzyme extraction

The sample for enzyme activity measurement was ground in the frozen state with a plant grinder, MM300 MIXER MILL GRINDER (Retsch), and suspended in 500 µL of an extraction buffer [100 mM NaH₂PO₄/Na₂HPO₄ (pH 6.0), 1 mM DTT]. The suspension was centrifuged at 10,000 rpm for 5 minutes, and the supernatant fraction was used as a crude extraction fraction. The protein concentration of the crude extraction fraction was measured by the Bradford method.

### (3) Measurement of chitinase activity

Chitinase activity was measured by the method of McCreath et al. (McCreath, K. et al., J. Microbiol. Methods, 14:229-237, 1992). That is, 4MU-(GlcNAc)₃ (4-methylumbelliferyl-β-d-N,N',N"-triacetylchitobiose, SIGMA M5639) as a substrate was dissolved in 50% ethanol at a concentration of 0.4 mM, and the solution was stored at - 20°C. The solution was diluted 10 times with 50% ethanol at the time of use to prepare a substrate solution. The aforementioned crude extraction fraction was diluted with the aforementioned extraction buffer to a protein concentration of 1 µg/µL to prepare a sample. The samples were put into wells of a 96-well plate in a volume of 50 µL each, 50 µL of the substrate solution was added to each well, and the reaction was started at 37°C. Thirty and ninety minutes after the start of the reaction, 100 µL of 1 M Gly/NaOH buffer (pH 10.2) was added to the reaction mixture to terminate the reaction. After the bubbles on the liquid surface were completely removed, fluorescence intensity was measured at an excitation wavelength of 360 nm and fluorescence wavelength of 450 nm by using a plate reader for fluorescence detection, SpectraMax M2 (Molecular Devices). The amount of released 4MU (4-methylumbelliferone), which was used as a standard substance, was calculated, and the amount of enzyme that reacts with 1 µmol of the substrate in 1 minute was defined as one unit.

### (4) Peroxidase activity

Peroxidase activity was measured by using a fluorescent substrate, AmplexRed. AmplexRed Ultra Reagent (Invitrogen A36006) was dissolved in DMSO at a concentration of 10 mM (1 mg/330 µl), and the solution was stored at -20°C. H₂O₂ was diluted to 20 mM with water, and the solution was stored at 4°C. By using these solutions, a substrate solution (100 mM NaH₂PO₄/Na₂HPO₄ (pH 7.4), 2 mM H₂O₂, 50 µM AmplexRed) was prepared. The aforementioned crude extraction fraction was diluted with the aforementioned extraction buffer to a protein concentration of 1 ng/µl to prepare a sample. The samples were put into wells of a 96-well plate (Greiner blank half volume microplate), the reaction was started by adding 40 µl each of the substrate solution to the wells, and fluorescence intensity was measured over time. The fluorescence intensity was measured for 10 minutes at an excitation wavelength of 544 nm, and fluorescence wavelength of 544/590 nm with an interval of 90 seconds by using a plate reader, SpectraMax M2 (Molecular Devices). The quantification was performed in a period in which the reaction was linearly advancing. The reaction amount was calculated by using a peroxidase standard sample (P8415-5KU, Sigma), and the amount of the enzyme that reacts with 1 µmol of the substrate in 1 minute was defined as one unit.

### (5) Results

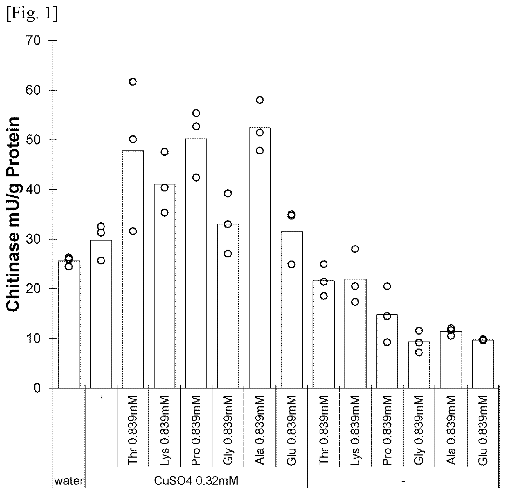

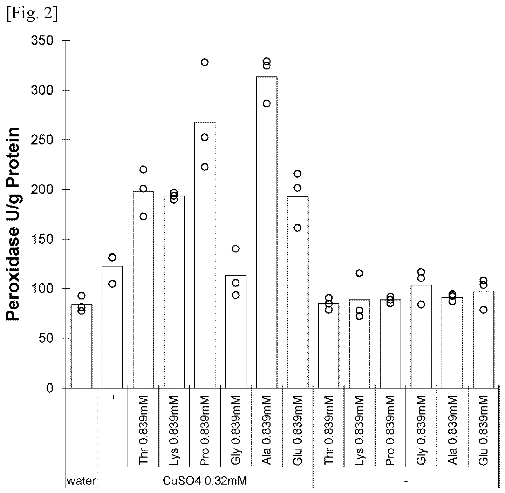

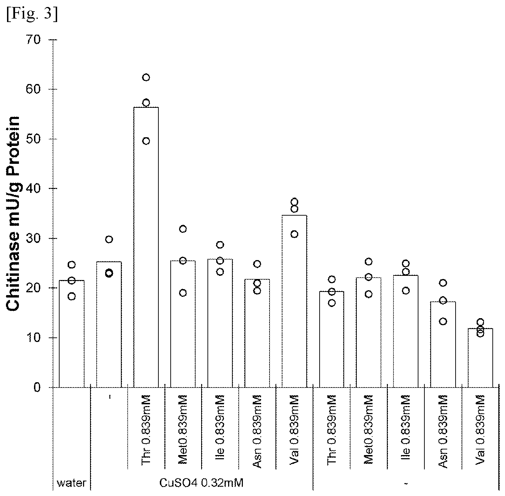

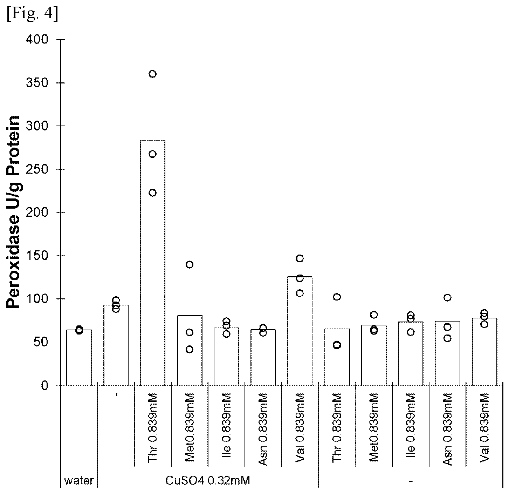

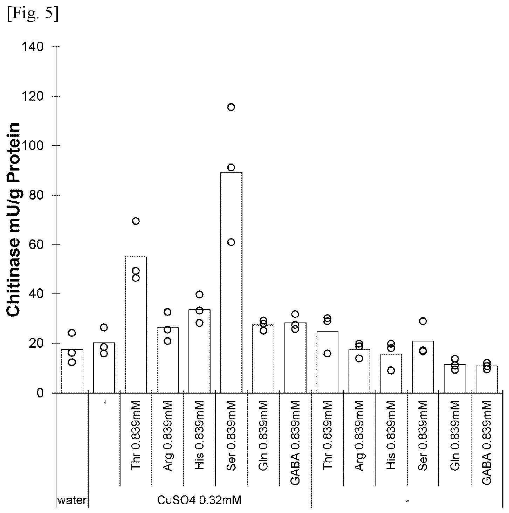

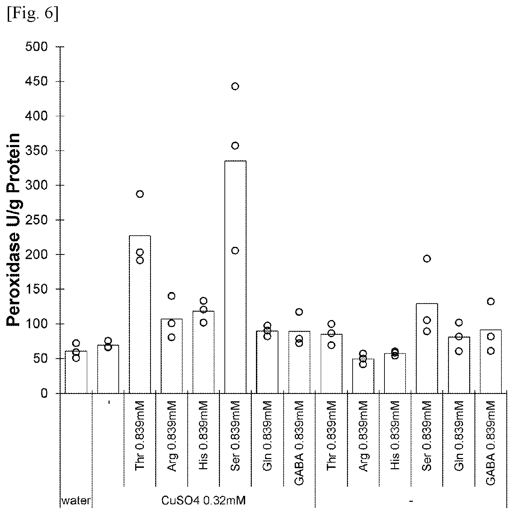

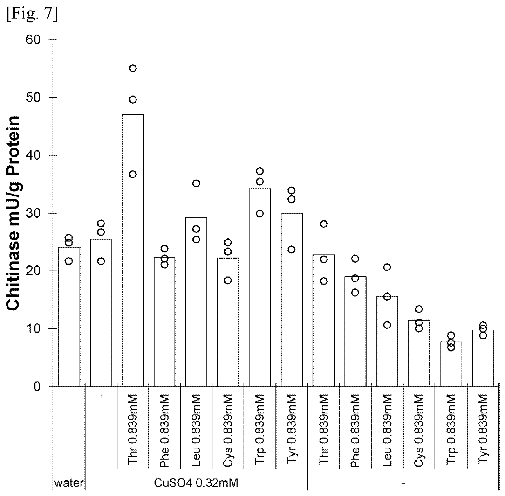

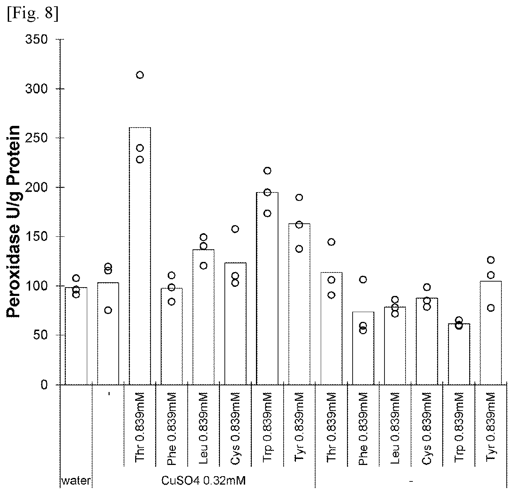

The results are shown in Figs. 1 to 8 (n = 3). When copper sulfate and Thr, Pro, Ala, Val, Ser, Trp, or Tyr were used in combination, increases of the chitinase activity and peroxidase activity, which are disease resistance markers of plants, were observed compared with the case where copper sulfate alone was used.

### [Example 2] Evaluation of disease resistance-inducing effect of concomitant use of copper sulfate and amino acid in cucumber plant (2)

For the seven kinds of amino acids, for which chitinase activity and peroxidase activity-inducing effect was observed in concomitant use thereof with copper sulfate (Thr, Pro, Ala, Val, Ser, Trp, and Tyr) in Example 1, and Lys known to show bactericidal effect in concomitant use with copper sulfate, disease resistance-inducing effects thereof in concomitant use with copper sulfate were evaluated again by the method described in Example 1.

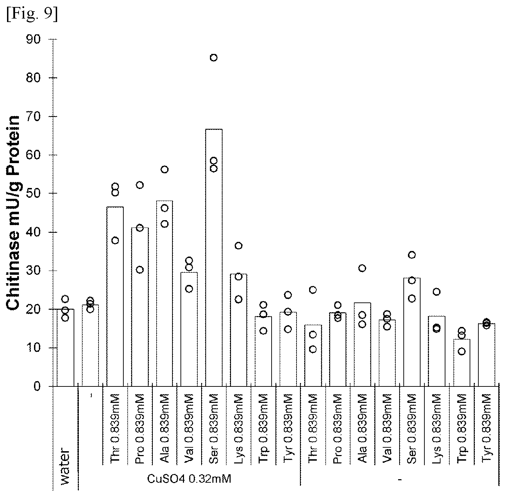

The results are shown in Figs. 9 and 10 (n = 3). In particular, for concomitant use of copper sulfate and Thr, Pro, Ala or Ser, higher disease resistance-inducing effect was observed compared with that observed with the concomitant use of copper sulfate and Lys. Among the amino acids, when copper sulfate and Ser or Thr were used together, markedly higher disease resistance-inducing effect was observed.

### [Example 3] Evaluation of influence of amino acid concentration on induction of disease resistance by concomitant use of amino acid and copper sulfate in cucumber plant

Influence of concentration of each amino acid on induction of disease resistance by concomitant use of the amino acid and copper sulfate in cucumber plants was evaluated. That is, for the eight kinds of amino acids evaluated in Example 2 (Thr, Pro, Ala, Val, Ser, Trp, Tyr, and Lys), disease resistance-induction effect of concomitant use thereof with copper sulfate was evaluated by the method described in Example 1 at amino acid concentrations of 0.17, 0.36, 0.50, 0.67, 0.84, and 1.01 mM.

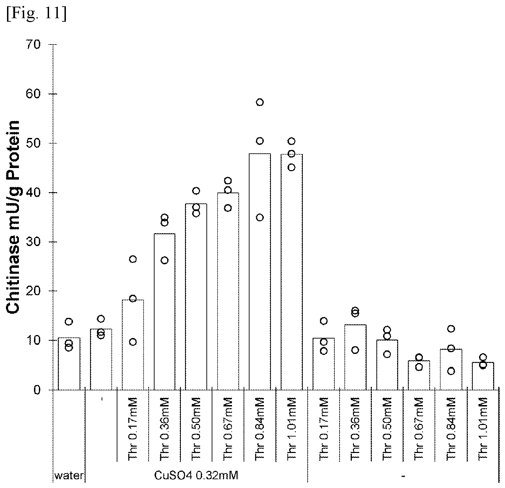

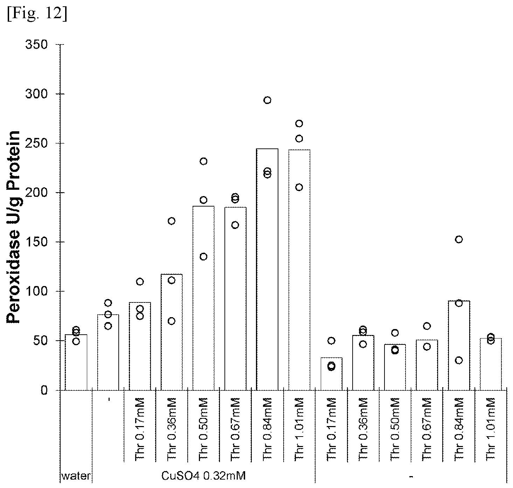

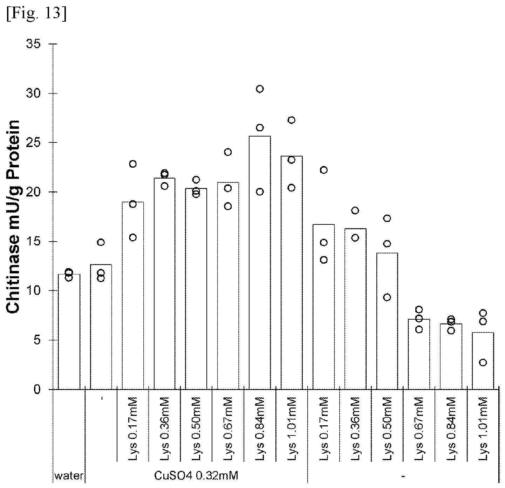

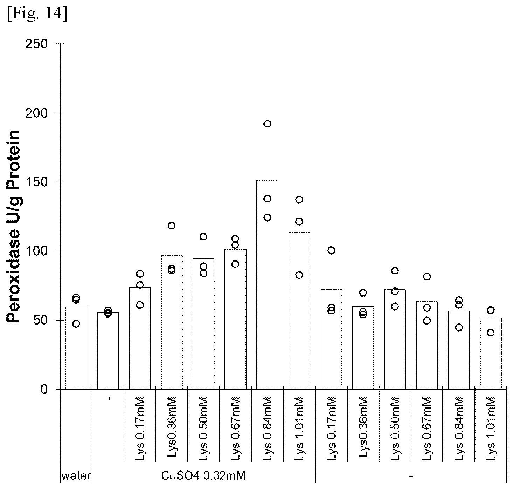

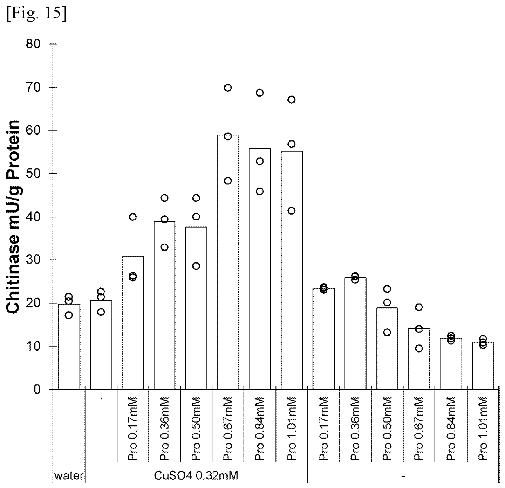

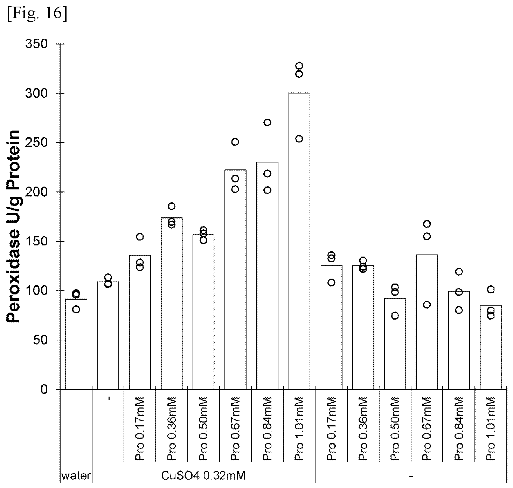

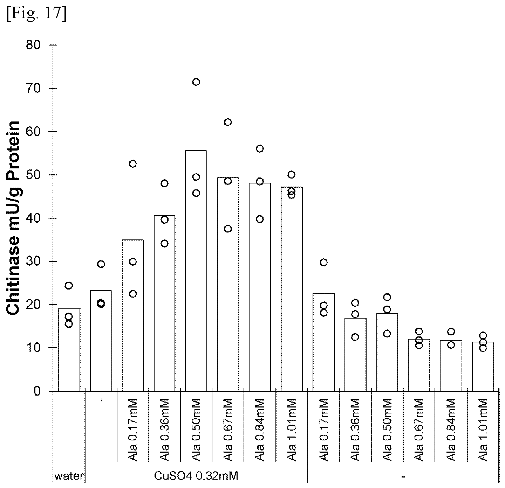

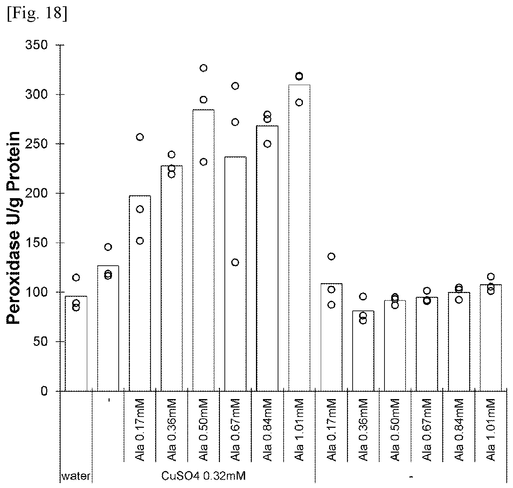

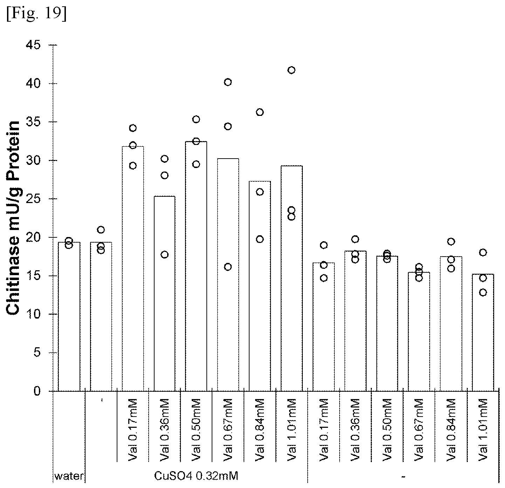

The results are shown in Figs. 11 to 26 (n = 3). For all the amino acids, concentration dependency of the disease resistance-inducing effect of concomitant use with copper sulfate was confirmed. It was also shown that there are differences in saturation concentrations and maximum effects of the disease resistance-inducing effect of concomitant use with copper sulfate depending on the kind of amino acid. With 0.32 mM copper sulfate, 0.84 mM Lys or Thr, 0.67 mM Ser, 0.50 mM Ala, Val, or Trp showed the maximum effects. Tyr showed the highest effect at 0.17 mM in the tested concentration range. As for Pro, the effect did not reach the maximum in the tested concentration range, and it was found in a test separately performed by using it in a higher concentration range that it showed the maximum effect at 1.18 mM (Figs. 27 and 28). The amino acid concentrations required for the maximum effects in this test are defined as optimum concentrations of the amino acids.

### [Example 4] Evaluation of disease resistance-inducing effect of concomitant use of copper sulfate and each amino acid of optimum concentration in cucumber plant

For the eight kinds of amino acids evaluated in Example 2 (Thr, Pro, Ala, Val, Ser, Trp, Tyr, and Lys), disease resistance-inducing effect of concomitant use thereof with copper sulfate was evaluated by the method described in Example 1 using each amino acid at the optimum concentration. The optimum concentration of each amino acid was set to be 0.84 mM for Lys and Thr, 0.67 mM for Ser, 0.50 mM for Ala, Val, and Trp, 0.17 mM for Tyr, or 1.18 mM for Pro on the basis of the results of Example 3.

The results are shown in Figs. 29 and 30 (n = 3). In particular, concomitant use of copper sulfate and Thr, Pro, Ala, or Ser showed higher disease resistance-inducing effect compared with that observed with concomitant use of copper sulfate and Lys. Among these, concomitant use of copper sulfate and Ser or Thr showed markedly higher resistance-inducting effect.

### [Example 5] Evaluation of disease control effect of concomitant use of copper sulfate and amino acid for cucumber anthracnose

In this example, copper sulfate and one of various amino acids were applied in combination to first foliage leaves of cucumber plants, and disease control effect thereof was evaluated by using decrease of susceptible lesions caused by *Colletotrichum orbiculare* as an index.

### (1) Cultivation of plant body and sprinkling method

With the eight kinds of amino acids evaluated in Example 2 (Thr, Pro, Ala, Val, Ser, Trp, Tyr, and Lys) at the optimum concentrations, sprinkling treatment on first foliage leaves of cucumber plants was performed by the method described in Example 1. For 0.32 mM copper sulfate, the optimum concentration of each amino acid was set to be 0.84 mM for Lys and Thr, 0.67 mM for Ser, 0.50 mM for Ala, Val, and Trp, 0.17 mM for Tyr, or 1.18 mM for Pro on the basis of the results of Example 3. The quantitative ratio of each amino acid to copper was 2.625 for Lys and Thr, 2.094 for Ser, 1.563 for Ala, Val, and Trp, 0.531 for Tyr, or 3.688 for Pro in terms of molar ratio.

### (2) Evaluation of disease control effect for cucumber anthracnose

Twenty-four hours after the sprinkling treatment, *Colletotrichum lagenarium* (*Colletotrichum lagenarium* 104-T strain) was inoculated to the cucumber plants. The inoculation was performed by spraying a conidium suspension (1 x 10⁵ conidia/mL) onto leaf surfaces. After the inoculation, the plants were left standing in a dark and humid chamber for 24 hours to make *Colletotrichum lagenarium* infect the cucumber plants. Seven days after the inoculation, number of infectious susceptible lesions generated in each treated leaf was measured.

The results are shown in Fig. 31 (n = 3). When copper sulfate and an amino acid were used together, decrease of the number of susceptible lesions was observed compared with the case where copper sulfate alone was used or the case where amino acid alone was used. In particular, when Thr, Pro, Ala, Ser, or Trp was used together with copper sulfate, higher disease control effect was observed compared with the case where copper sulfate and Lys are used together. Especially, when copper sulfate and Ser or Thr were used together, markedly higher disease control effect was observed. Among the five kinds of amino acids for which higher disease control effect compared with Lys was observed in this example, four kinds of amino acids other than Trp (Thr, Pro, Ala, and Ser) agreed with the four kinds of amino acids for which higher resistance-inducing effect was observed compared with Lys in Example 4. Furthermore, Ser and Thr showed marked effects for both disease resistance-inducing effect and disease control effect.

### [Example 6] Evaluation of disease resistance-inducing effect of concomitant use of copper sulfate and various amino acids having hydroxyl group in cucumber plant

Ser and Thr, of which concomitant uses with copper sulfate were confirmed to show marked disease resistance-inducing effect and disease control effect, are amino acids having a hydroxyl group. On the other hand, Tyr, which is an aromatic amino acid similarly having a hydroxyl group, but also having a benzene ring, showed low disease control effect. Therefore, typical examples of aromatic and non-aromatic amino acids were chosen from other amino acids having a hydroxyl group, and disease resistance-inducing effects of concomitant uses thereof with copper sulfate were evaluated by the method described in Example 1. As the non-aromatic amino acids, Hse (homoserine) and Hyp (hydroxyproline) were selected, and as the aromatic amino acid, DOPA (3,4-dihydroxyphenylalanine) was selected.

The results are shown in Figs. 32 and 33 (n = 3). When copper sulfate was used together with Hse or Hyp, marked chitinase activity and peroxidase activity-inducing effects were observed, and the effects were comparable to those obtainable with concomitant use of copper sulfate and Ser. On the other hand, the chitinase activity and peroxidase activity-inducing effects of concomitant use of copper sulfate and DOPA were similar to those obtained by concomitant use of copper sulfate and Lys.

### [Example 7] Evaluation of disease control effect of concomitant use of copper sulfate and various amino acids containing hydroxyl group for cucumber anthracnose

Disease control effects of concomitant uses of copper sulfate and the amino acids evaluated in Example 6 (Hse, Hyp, and DOPA) were evaluated by the method described in Example 5.

The results are shown in Fig. 34 (n = 3). When copper sulfate and Hse or Hyp were used together, marked disease control effect was observed, and the effect was comparable to that obtainable by using copper sulfate and Ser or Thr together. On the other hand, when copper sulfate and DOPA were used together, disease control effect was not observed, but on the contrary, infection was promoted.

### [Example 8] Disease resistance-inducing effect of concomitant use of copper sulfate or copper chloride and amino acid in cucumber plant

Disease resistance-inducing effects of concomitant uses of copper sulfate or copper chloride and the eight kinds of amino acids evaluated in Example 2 (Thr, Pro, Ala, Val, Ser, Trp, Tyr, and Lys) at the optimum concentrations were evaluated by the method described in Example 1.

The results are shown in Figs. 35 and 36 (n = 3). For both copper sulfate and copper chloride as the copper compound used together, the same tendency was observed for the difference in magnitude of the disease resistance-inducing effect depending on the type of amino acid. That is, it was suggested that the disease resistance-inducing effect of concomitant use of amino acid and copper compound is obtained by a combination of amino acid and copper ion.

### [Example 9] Evaluation of influence of copper sulfate concentration on induction of disease resistance by concomitant use of copper sulfate and Thr in cucumber plant

Influence of copper sulfate concentration on induction of disease resistance by concomitant use of copper sulfate and Thr in cucumber plant was evaluated. That is, the disease resistance-inducing effect of concomitant use of copper sulfate and Thr was evaluated by the method described in Example 1 with a fixed Thr concentration of 0.84 mM, which is the optimum concentration, and a copper sulfate concentration of 0.08, 0.16, 0.20, 0.24, 0.28, or 0.32 mM.

The results are shown in Figs. 37 and 38 (n = 3). Copper sulfate concentration dependency of the disease resistance-inducing effect of concomitant use of copper sulfate and 0.84 mM Thr was confirmed, and the maximum effect was observed at a copper sulfate concentration of 0.16 mM.

### [Example 10] Disease resistance-inducing effect of concomitant use of copper sulfate and alcohol in cucumber plant

In Examples 6 and 7, marked disease resistance-inducing effect and disease control effect of concomitant use with copper sulfate were confirmed for four kinds of non-aromatic amino acids having a hydroxyl group (Thr, Ser, Hse, and Hyp). Therefore, typical alcohols were chosen as substances having a hydroxyl group other than amino acid, and disease resistance-inducing effect of concomitant use thereof with copper sulfate was evaluated by the method described in Example 1. As the alcohols, EgOH (ethylene glycol), IpOH (isopropanol), GcOH (glycerol), and EtOH (ethanol) were selected. For comparison, Thr and Ser, for which marked disease resistance-inducing effect and disease control effect were confirmed in the previous examples, were also evaluated again.

The results are shown in Figs. 39 and 40 (n = 3). When copper sulfate and Thr or Ser were used together, marked disease resistance-inducing effect was reproduced, but when copper sulfate and EgOH, IpOH, GcOH, or EtOH were used together, disease resistance-inducing effect was low.

### [Example 11] Evaluation of disease resistance-inducing effect of concomitant use of copper sulfate and amino acid in tomato plant

In this example, copper sulfate and five kinds of amino acids (Lys, Thr, Ser, Trp, and Ala) were applied to tomato plants in combination, and disease resistance-inducing effect thereof was evaluated by using expression of disease resistance genes as an index.

### (1) Cultivation of plant body and sprinkling of treatment solution

Two seeds of tomato (variety, Momotaro Fight) were seeded on compost contained in a slit pot having a diameter of 10.5 cm (opening diameter 10.5 cm x height 8.8 cm), and cultivation was performed in a biotron at a temperature of 23°C with 14 hours of light period (6:00 to 20:00) and 10 hours of dark period (20:00 to 6:00). As the compost, a mixture of Kumiai Nippi Engei Baido No. 1 (Nihon Hiryo) and vermiculite in a volume ratio of 3:1 was used. After one week, the plants were thinned out to leave one root, of which cultivation was then continued. After 25 days passed from the seeding, each treatment solution containing 0.1% of a spreading agent, Applauch BI (Kao), was sprinkled on the whole plant. The treatment groups are shown in Table 1. The amino acid concentration was 0.84 mM for all the amino acids, and the concentration of copper sulfate was 0.32 mM (0.002% as Cu). Three roots of tomato plants were used for each treatment group, and 4 mL of treatment solution was sprinkled for one root. Twenty-four hours after the sprinkling, a 1.5 cm x 1.5 cm square part was collected from the second foliage leaf as a sample.

**Table 1: Treatment group**

| Treatment group No. | Composition of treatment solution | Name of treatment group |
|---|---|---|
| 1 | Con. (water) | Con. |
| 2 | 0.32 mM Cu (CuSO₄ · 5H₂O) | Cu |
| 3 | 0.84 mM Lysine (Lys) | Lys |
| 4 | 0.84 mM Threonine (Thr) | Thr |
| 5 | 0.84 mM Serine (Ser) | Ser |
| 6 | 0.84 mM Tryptophan (Trp) | Trp |
| 7 | 0.84 mM Alanine (Ala) | Ala |
| 8 | 0.84 mM Lys + 0.32 mM Cu | Lys+Cu |
| 9 | 0.84 mM Thr + 0.32 mM Cu | Thr+Cu |
| 10 | 0.84 mM Ser + 0.32 mM Cu | Ser+Cu |
| 11 | 0.84 mM Trp + 0.32 mM Cu | Trp+Cu |
| 12 | 0.84 mM Pro + 0.32 mM Cu | Pro+Cu |

### (2) Gene expression analysis

RNAs were extracted from the sample by using SV Total RNA Isolation System TM (Promega) according to the manual of the kit. Then, single strand cDNAs were synthesized from the extracted RNAs by using ReverTra Ace TM qPCR RT Master Mix (TOYOBO). As genes relevant to disease resistance of tomato plants, the following nine genes were selected: WRKY-type transcription factor (SLWRKY); glucanase (SLGlu); chitinase (SLChi); Pto-interactor 5 (SLPti 5); glutathione S-transferase (SLGST); enhanced disease susceptibility 1 protein (SLEDS 1); pathogenesis-related protein (SLPR 1a); phenylalanine ammonia lyase 5 (SLPAL 5); and OPR 12-oxophytodienoate reductase 3 (SLOPR 3). Real-time PCR was performed by using the aforementioned cDNAs as the template and the primers shown in Table 2, and expression amount of each gene was calculated as a relative expression amount based on that of the actin gene.

**Table 2: Real-time PCR primers for tomato**

| Gene | Primer | Sequence (5'-3') | SEQ ID NO. |
|---|---|---|---|
| *Actin* (Tom 52 Accession No: U60482) | F | CACCATTGGGTGTGAGCGAT | 1 |
| | R | GGGCGACAACCTTGATCTTC | 2 |
| *SLWRKY* (Accession No: XM004248027) | F | GTGTTGACTAAAGATGCTGGG | 3 |
| | R | GGTGAAAGATCACCATCAGCAA | 4 |
| *SLGlu* (Accession No: AY170827) | F | TTTCGATGCCCTTGTGGATTC | 5 |
| | R | GGCCAACCACTTTCCGATAC | 6 |
| *SLChi* (Accession No: LEU30465) | F | TGGGGCAGCAGGGAGTGCAA | 7 |
| | R | TACACCAAAGCCCGGGACGC | 8 |
| *SLPti 5* (Accession No: LEU89256) | F | GAGAGTATGGCTAGGTACGTTCG | 9 |
| | R | TAAGTAGTGCCTTAGCACCTCGC | 10 |
| *SLGST* (Accession No: AW035632) | F | GCCCTTCCATCTTGCCTAAAG | 11 |
| | R | GTCACCAAAACAACTCCAGATGC | 12 |
| *SLPR1a* (Accession No: AW035632) | F | TATACTCAAGTAGTCTGGCGCAAC | 13 |
| | R | CCTACAGGATCGTAGTTGCAAGA | 14 |
| *SLEDS 1* (Accession No: AY679160) | F | GAATGACCTTGGCCTGAGTACAAG | 15 |
| | R | CCTGCTGCACGAAGACACAG | 16 |
| *SLPAL 5* (Accession No: M90692) | F | CAATGGCTTCTTACTGCTCGG | 17 |
| | R | CATCTTGGTTGTGTTGCTCAGC | 18 |
| *SLOPR 3* (Accession No: JN241968) | F | TTGGCTTAGCAGTTGTTGAAAG | 19 |
| | R | TACGTATGGTGGCTGTGATCA | 20 |

| | | | |
|---|---|---|---|
| F, Forward primer; R, Reverse primer. | | | |

The results are shown in Figs. 41 and 42 (n = 3). In Fig. 42, the data obtained with the concomitant use of copper sulfate and an amino acid for the gene expression amount among the data mentioned Fig. 41 are shown in the descending order. There was observed a tendency that higher disease resistance-inducing effect was obtained in the order of the combination of Thr or Ser and copper sulfate, combination of Trp and copper sulfate, and combination of Ala or Lys and copper sulfate.

### [Example 12] Evaluation of disease resistance-inducing effect of concomitant use of copper sulfate and Thr fermentation liquid in tomato plant

Disease resistance-inducing effect in tomato plants was evaluated by the method described in Example 11 with a fermentation liquid containing Thr. The treatment groups are shown in Table 3. The concentration of Thr in the fermentation liquid containing Thr was adjusted to 0.84 mM. For real-time PCR, the primers shown in Table 2 were used.

**Table 3: Treatment group**

| Treatment group No. | Composition of treatment solution | Name of treatment group |
|---|---|---|
| 1 | Con. (water) | Con. |
| 2 | 0.32 mM Cu (CuSO4 · 5H2O) | Cu |
| 3 | 0.84 mM Threonine (Thr) | Thr |
| 4 | 0.84 mM Threonine (Thr)+ 0.002% Cu | Thr+Cu |
| 5 | Thr fermentation solution (0.84 mM Thr) | ThrML |
| 6 | Thr fermentation solution (0.84 mM Thr) + 0.32 mM Cu | ThrML+Cu |

The results are shown in Fig. 43 (n = 3). ThrML + Cu showed disease resistance-inducing effect equivalent to or higher than that obtained with Thr + Cu in tomato plants.

### [Example 13] Evaluation of influence of Hyp and Hse concentrations on induction of disease resistance by concomitant use thereof with copper sulfate in cucumber plant

For Hyp and Hse, for which marked disease resistance-inducing effect and disease control effect of concomitant use thereof with copper sulfate were confirmed in Examples 6 and 7, influence of concentrations thereof on induction of disease resistance by concomitant use thereof with copper sulfate in cucumber plants was evaluated. That is, disease resistance-inducing effect of concomitant use of Hyp or Hse and copper sulfate was evaluated by the method described in Example 1 using Hyp or Hse at concentrations of 0.17, 0.36, 0.50, 0.67, 0.84, and 1.01 mM.

The results are shown in Figs. 44 to 47 (n = 3). Concentration dependency of the disease resistance-inducing effect of concomitant use with copper sulfate was confirmed for both Hyp and Hse. Between Hyp and Hse, differences were confirmed in saturation concentration and maximum effect of the disease resistance-inducing effect provided by the concomitant use thereof with copper sulfate. Hyp provided the maximum effect at 0.84 mM with 0.32 mM copper sulfate. On the other hand, Hse did not provide the maximum effect within the tested concentration range, and a separately performed test using a higher concentration range suggested a possibility that the maximum effect may be obtained at a concentration higher than 1.51 mM (Figs. 48 and 49).

### [Example 14] Disease resistance-inducing effect of concomitant use of copper(I) chloride or copper(II) chloride and amino acid in cucumber plant

Among the amino acids evaluated in Example 2, for Thr and Ser, of which concomitant use with copper sulfate showed especially marked disease resistance-inducing effect, disease resistance-inducing effect of concomitant use thereof (concentration was 0.84 mM) with copper(I) chloride or copper(II) chloride was evaluated by the method described in Example 1.

The results are shown in Figs. 50 and 51 (n = 3). For both copper(I) chloride and copper(II) chloride, marked disease resistance-inducing effect of concomitant use thereof with Thr or Ser was confirmed. That is, it was suggested that the disease resistance-inducing effect of concomitant use of amino acid and copper compound is obtained by a combination of amino acid and copper ion, and the copper ion may be monovalent or divalent.

### [Example 15] Disease control effect of concomitant use of copper sulfate and Ser for strawberry anthracnose

In this example, disease control effect of the combination of copper sulfate and Ser, for which marked disease resistance-inducing effect and disease control effect were confirmed in cucumber plants, was confirmed in strawberry plants. That is, copper sulfate and Ser were applied in combination to foliage leaves of strawberry plants, and disease control effect thereof was evaluated by using reduction of number of susceptible lesions caused by the strawberry anthracnose bacteria as an index.

Strawberry plants (variety, Nyoho (*Fragaria X ananassa* Duch. cv. Nyoho)) were subcultured through runner culture in pots filled with mixed soil of compost for horticulture (Kumiai Nippi Engei Baido No. 1, JA) and vermiculite in a volume ratio of 3:1 in an outdoor glass greenhouse (a set of 25°C for 14 hours and 17°C for 8 hours was repeated, and light intensity was left to natural course) to prepare seedlings, which grew up to have about three or four foliage leaves, and were used as plant materials. As the treatment solution, an aqueous solution containing a combination of 0.32 mM copper(II) sulfate and 0.84 mM Ser, and ultrapure water as a mock treatment solution were prepared. Before use of each treatment solution in the experiment, Applauch BI (Kao, "Applauch BI" is a registered trademark of Kao) was added as a spreading agent at a 1/1000 concentration to the treatment solution. Each treatment solution was sprinkled to the whole prepared seedling in a volume of about 2 mL/root with a sprayer so that surfaces and back faces of the leaves were splashed with the treatment solution. Twenty-four hours after the sprinkling treatment, the strawberry anthracnose bacterium (*Colletotrichum gloeosporioides* Nara gc5 strain) was inoculated on the strawberry plants. The inoculation was performed by sprinkling a conidium suspension (5 x 10⁵ conidia/mL) onto the leaf surfaces. After the inoculation, the plants were left standing in a dark and humid chamber for 24 hours to make the strawberry anthracnose bacterium infect the strawberry plants. Four days after the inoculation, numbers of susceptible lesions developed in the leaves were counted for every root and every leaf.

The results are shown in Fig. 52 (n = 3). With the concomitant use of copper sulfate and Ser, marked reduction of the numbers of susceptible lesions was observed compared with the case where ultrapure water was applied.

### [Example 16] Evaluation of disease resistance-inducing effect of concomitant use of copper sulfate and amino acid in strawberry plant

In this example, copper sulfate and various amino acids were applied in combination to strawberry plants, and disease resistance-inducing effect thereof was evaluated by using expression of disease resistance genes as an index.

Strawberry seeds (variety, Shikinari (*Fragaria ananassa* cv. Shikinari) were seeded on soil contained in 5-cm pots, and cultivation was performed in a plant chamber. Cultivation conditions were the same as those used for cultivation of tomato plants in Example 11. About 50 days after the seeding, each treatment solution containing 0.1% of a spreading agent, Applauch BI (Kao), was sprinkled on the whole plant. The treatment groups are shown in Table 4. Three roots of the strawberry plant were used for each treatment group, and 2 mL of each treatment solution was sprinkled on one root of the plant.

**Table 4: Treatment group**

| Treatment group No. | Composition of treatment solution | Name of treatment group |
|---|---|---|
| 1 | Con. (water) | Con. |
| 2 | 0.84 mM Lys + 0.32 mM Cu | Lys+Cu |
| 3 | 0.84 mM Thr + 0.32 mM Cu | Thr+Cu |
| 4 | 0.84 mM Ser + 0.32 mM Cu | Ser+Cu |
| 5 | 0.84 mM Ala + 0.32 mM Cu | Ala+Cu |
| 6 | 0.84 mM Trp + 0.32 mM Cu | Trp+Cu |
| 7 | 0.84 mM Pro + 0.32 mM Cu | Pro+Cu |

The first foliage leaf was collected 24 hours after the sprinkling, RNA was extracted, and expressions of genes relevant to disease resistance of strawberry plant were analyzed by real-time PCR. As genes relevant to the disease resistance of strawberry plant, the following three kinds of genes were chosen: osmotin-like protein (OLP2); phenylalanine ammonia lyase (PAL); and chitinase 2-1 (Chi2-1). The used primers are shown in Table 5. The collection of samples and analysis of gene expression were carried out by the same methods as those of Example 11. Expression amount of each gene was calculated as a relative expression amount based on that of actin (FaActin) gene.

**Table 5: Real-time PCR primers for strawberry**

| Gene | Primer | Sequence (5'-3') | SEQ ID NO. |
|---|---|---|---|
| *FaActin* (Accession No: AB116565) | F | GCCAGAAAGATGCTTATGTCGGTG | 21 |
| | R | TGGGGCAACACGAAGCTCAT | 22 |
| *FaOPL2* (Accession No: DQ325524) | F | AGCACGATTCGATATCCGA | 23 |
| | R | TGTTGAACTGGTTAAGCCCG | 24 |
| *FaPAL* (Accession No: KX450226) | F | GATGTCAACTCCTTGGGACTG | 25 |
| | R | TCCACGACTGAGAGCAGGTG | 26 |
| *FaChi2-1* (Accession No: AF147091) | F | TGCAGCCTTCTAATGATCAACACC | 27 |
| | R | GATGGCAGCGAGAGTACTGC | 28 |

| | | | |
|---|---|---|---|
| F, Forward primer; R, Reverse primer. | | | |

The results are shown in Fig. 53 (n = 3). Marked expression-inducing effect was observed for all the genes (FaOPL2, FaPAL, and FaChi2-1) with concomitant uses of copper sulfate and all the amino acids compared with the case of treatment with water (Con.). Compared with the combination of Lys and copper sulfate, more marked expression-inducing effect was observed with a combination of Thr, Ser or Pro and copper sulfate for the FaOPL2 gene, combination of Trp or Pro and copper sulfate for the FaPAL gene, and combination of Thr, Ser, Ala, Trp or Pro and copper sulfate for the FaChi2-1 gene.

### Industrial Applicability

According to the present invention, a method for inducing disease resistance in a plant can be provided.

### <Explanation of Sequence Listing>

SEQ ID NOS: 1 to 28, Primers

## Claims

1. A method for inducing disease resistance in a plant, the method comprising:
applying the following ingredients (A) and (B) to the plant,
(A) at least one kind of copper compound;
(B) at least one kind of amino acid,
wherein the ingredient (B) is selected from the group consisting of an amino acid having a hydroxyl group and tryptophan, wherein the amino acid having a hydroxyl group is a non-aromatic amino acid having a hydroxyl group.

2. The method according to claim 1, wherein the ingredient (B) is selected from the group consisting of threonine, serine, homoserine, and hydroxyproline.

3. The method according to claim 1 or 2, wherein the ingredient (B) is an L-isomer.

4. The method according to any one of claims 1 to 3, wherein the ingredient (A) is a copper salt.

5. The method according to any one of claims 1 to 4, wherein the ingredient (A) is copper sulfate or copper chloride.

6. The method according to any one of claims 1 to 5, wherein the plant is a *Solanaceae* plant, a *Cucurbitaceae* plant, or a *Rosaceae* plant.

7. The method according to any one of claims 1 to 6, wherein the plant is tomato, cucumber, or strawberry.

8. The method according to any one of claims 1 to 7, wherein the ingredient (A) is applied in the form of a liquid containing the ingredient (A) at a concentration of 0.01 mM to 5 mM.

9. The method according to any one of claims 1 to 8, wherein the ingredient (B) is applied in the form of a liquid containing the ingredient (B) at a concentration of 0.02 mM to 10 mM.

10. The method according to any one of claims 1 to 9, wherein the ratio of application amount of the ingredient (B) to application amount of the ingredient (A) (application amount of the ingredient (B)/application amount of the ingredient (A)) is 0.1 to 10 in terms of molar ratio.

## Patentansprüche

1. Verfahren zur Induzierung von Krankheitsresistenz in einer Pflanze, wobei das Verfahren umfasst:
Aufbringen der folgenden Inhaltsstoffe (A) und (B) auf die Pflanze,
(A) mindestens eine Art von Kupferverbindung;
(B) mindestens eine Art von Aminosäure,
wobei der Inhaltsstoff (B) aus der Gruppe ausgewählt ist, die aus einer Aminosäure mit einer Hydroxylgruppe und Tryptophan besteht, wobei die Aminosäure mit einer Hydroxylgruppe eine nicht-aromatische Aminosäure mit einer Hydroxylgruppe ist.

2. Verfahren nach Anspruch 1, wobei der Inhaltsstoff (B) aus der Gruppe ausgewählt ist, die aus Threonin, Serin, Homoserin und Hydroxyprolin besteht.

3. Verfahren nach Anspruch 1 oder 2, wobei der Bestandteil (B) ein L-Isomer ist.

4. Verfahren nach einem der Ansprüche 1 bis 3, wobei der Inhaltsstoff (A) ein Kupfersalz ist.

5. Verfahren nach einem der Ansprüche 1 bis 4, wobei der Inhaltsstoff (A) Kupfersulfat oder Kupferchlorid ist.

6. Verfahren nach einem der Ansprüche 1 bis 5, wobei die Pflanze eine *Solanaceae*-Pflanze, eine *Cucurbitaceae-Pflanze* oder eine Rosaceae-Pflanze ist.

7. Verfahren nach einem der Ansprüche 1 bis 6, wobei die Pflanze eine Tomate, eine Gurke oder eine Erdbeere ist.

8. Verfahren nach einem der Ansprüche 1 bis 7, wobei der Inhaltsstoff (A) in Form einer Flüssigkeit aufgebracht wird, die den Inhaltsstoff (A) in einer Konzentration von 0,01 mM bis 5 mM enthält.

9. Verfahren nach einem der Ansprüche 1 bis 8, wobei der Inhaltsstoff (B) in Form einer Flüssigkeit aufgebracht wird, die den Inhaltsstoff (B) in einer Konzentration von 0,02 mM bis 10 mM enthält.

10. Verfahren nach einem der Ansprüche 1 bis 9, wobei das Verhältnis der Aufbringungsmenge des Inhaltsstoffs (B) zur Aufbringungsmenge des Inhaltsstoffs (A) (Aufbringungsmenge des Inhaltsstoffs (B)/Aufbringungsmenge des Inhaltsstoffs (A)) 0,1 bis 10 in Bezug auf das Molverhältnis beträgt.

## Revendications

1. Procédé pour induire une résistance aux maladies chez une plante, le procédé comprenant :
l'application des ingrédients (A) et (B) suivants à la plante,
(A) au moins un type de composé de cuivre ;
(B) au moins un type d'acide aminé,
dans lequel l'ingrédient (B) est choisi parmi le groupe constitué d'un acide aminé ayant un groupe hydroxyle et du tryptophane, dans lequel l'acide aminé ayant un groupe hydroxyle est un acide aminé non aromatique ayant un groupe hydroxyle.

2. Procédé selon la revendication 1, dans lequel l'ingrédient (B) est choisi dans le groupe constitué par la thréonine, la sérine, l'homosérine et l'hydroxyproline.

3. Procédé selon la revendication 1 ou 2, dans lequel l'ingrédient (B) est un L-isomère.

4. Procédé selon l'une quelconque des revendications 1 à 3, dans lequel l'ingrédient (A) est un sel de cuivre.

5. Procédé selon l'une quelconque des revendications 1 à 4, dans lequel l'ingrédient (A) est du sulfate de cuivre ou du chlorure de cuivre.

6. Procédé selon l'une quelconque des revendications 1 à 5, dans lequel la plante est une plante de la famille des Solanaceae, une plante de la famille des Cucurbitaceae ou une plante de la famille des Rosaceae.

7. Procédé selon l'une quelconque des revendications 1 à 6, dans lequel la plante est une tomate, un concombre ou une fraise.

8. Procédé selon l'une quelconque des revendications 1 à 7, dans lequel l'ingrédient (A) est appliqué sous la forme d'un liquide contenant l'ingrédient (A) à une concentration comprise entre 0,01 mM et 5 mM.

9. Procédé selon l'une quelconque des revendications 1 à 8, dans lequel l'ingrédient (B) est appliqué sous la forme d'un liquide contenant l'ingrédient (B) à une concentration comprise entre 0,02 mM et 10 mM.

10. Procédé selon l'une quelconque des revendications 1 à 9, dans lequel le rapport entre la quantité appliquée de l'ingrédient (B) et la quantité appliquée de l'ingrédient (A) (quantité appliquée de l'ingrédient (B)/quantité appliquée de l'ingrédient (A)) est compris entre 0,1 et 10 en termes de rapport molaire.
